# EUROPÄISCHE PATENTSCHRIFT

(11) **EP 1 116 941 B1**
(45) Veröffentlichungstag und Bekanntmachung des Hinweises auf die Patenterteilung: **08.08.2007**
(21) Anmeldenummer: 01250012.0
(22) Anmeldetag: 09.01.2001
(51) Int. Cl.: G01G 19/414, G01G 19/00, G07B 17/00

(54) **Verfahren und Anordnung zum Steuern einer dynamischen Waage**
Method and device for controlling a dynamic weighing apparatus
Procédé et dispositif pour contrôler une balance dynamique

(30) Priorität: 14.01.2000 DE 10002886; 14.01.2000 DE 20001150 U
(43) Veröffentlichungstag der Anmeldung: 18.07.2001
(73) Patentinhaber: Francotyp-Postalia GmbH, 16547 Birkenwerder (DE)
(72) Erfinder: Hübler, Uwe, 15366 Neuenhagen (DE); Kubatzki, Ralf, 10405 Berlin (DE); Thiel, Wolfgang Dr., 13503 Berlin (DE)

(56) Entgegenhaltungen:
- EP-A- 0 514 107
- EP-A- 1 014 050
- EP-A- 1 014 051

## Beschreibung

Die Erfindung betrifft ein Verfahren zur Steuerung eines dynamischen Waagesystems, im weiteren dynamische Waage genannt, gemäß des Oberbegriffs des Anspruchs 1 und eine entsprechende Anordnung dafür gemäß des Oberbegriffs des Anspruchs 7. Solche dynamischen Waagen wiegen Wiegegut während des Transportvorganges und sind speziell in Postverarbeitungssytemen eingesetzt. Die Lösung bezweckt insbesondere eine effektive Mischpostverarbeitung in einer dynamischen Waage und Frankiereinrichtung.

Unter Mischpost wird ein unsortierter Stapel an Poststücken verstanden, die aber hinsichtlich der zu bedruckenden Seite ausgerichtet sind. Wenn nachfolgend von Briefen gesprochen wird, so geschieht das stellver-tretend auch für all die anderen möglichen Poststücke, die in Format, Dicke und Gewicht unterschiedlich sind. Verfahren und Anordnung sind für Anwender von Postverarbeitungssystemen sowohl mit einer dynamischen Waage und portoberechnenden Frankiermaschine als auch mit dynamischen Portorechnerwaagen und Frankiereinrichtungen geeignet.
Bei einer bekannten von der Anmelderin vertriebenen automatischen Poststraße Francopost 12000 ist eine dynamische Wiegestation hinter einer Vereinzelungsstation angeordnet. Die als Stapel angelegten Briefe werden zunächst automatisch vereinzelt und dann von der dynamischen Wiegestation übernommen und ihr Gewicht wird bestimmt. Die Gewichts-bestimmung erfolgt mit einer Genauigkeit, welche die Zuordnung der Briefe zur richtigen Portoklasse ermöglicht. Das Porto wird an die ange-schlossene Frankiereinheit automatisch übertragen, verrechnet und auf den Brief gedruckt. Beim Auftreffen des Briefes auf den Wiegeteller und dessen Transport werden mechanische Schwingungen auf den Gewichts-sensor übertragen, deren Amplitude vom Briefgewicht, von der Transportrichtung und -geschwindigkeit, Briefmasseverteilung sowie -steifigkeit abhängig sind. Diese Störschwingungen begrenzen die Genauigkeit des Messergebnisses. Im Allgemeinen wird bei dynamischen Briefwaagen eine Messgenauigkeit von ±1g angegeben bis zu einem Briefgewicht von 1000g. Das Einschwingen der dynamischen Waage benötigt beim Transport von schweren Poststücken, mit einem Gewicht größer als 1000g, infolge der Vibrationseinflüsse auf das Wiegesystem, mehr Zeit. Alle noch schwereren Briefe werden gewöhnlich mit einer geeigneten statischen Waage separat gewogen werden. Das entsprechende Gewicht bzw. Porto kann in die Frankiereinheit manuell eingegeben werden. Der automatische Ablauf ist damit unterbrochen. Besonders nachteilig ist der Umstand, dass der Postversender nicht vorhersehen kann, ob der spezielle Brief, den er gemeinsam mit den anderen als Stapel anlegt, diese Gewichtsgrenzen überschreiten wird oder nicht.

In der US 4,778,018 wird eine dynamische Briefwaage beschrieben, bei welcher der Wiegeteller federnd gegenüber dem Transportmechanismus aufgehängt ist. Damit sollen die Übertragung von Schwingungen vom Transportmechanismus auf die Wiegezelle gedämpft werden. Bei großen Gewichten reicht diese Dämpfung jedoch nicht aus, um eine ausreichende Messgenauigkeit zu sichern. Hinzu kommt, dass eine derartige federnde Aufhängung ein Einschwingen des Wiegetellers hervorruft, welche die Messzeit verlängert und damit den Briefdurchsatz verringert.

In der US 5,014,797 wird ein nicht modulares Gerät zur automatischen Postbearbeitung beschrieben, in welchem die dynamische Wiegefunktion integriert ist. Damit soll eine Verkürzung der Transportwege und ein insgesamt höherer Briefdurchlauf pro Zeiteinheit erreicht werden. Auch bei dieser Lösung ist das maximale Gewicht bei vorgegebener Mess-genauigkeit und Verarbeitungsgeschwindigkeit begrenzt. Ein nach dieser Lösung gebautes Produkt erreicht einen Durchsatz von ca. 5000 Briefen pro Stunde bei einem maximalen Gewicht von 500g. Für Briefe mit größerem Gewicht bietet der Hersteller eine zusätzliche statische Waage an, die beigestellt wird. Auch hier ist eine automatische Verarbeitung von Briefen höheren Gewichtes nicht möglich.

Aus der US 4,956,782 und der GB 22 35 656 A ist ein halbdynamisches Wiegen bekannt. Die stromaufwärts angeordnete Benutzerstation kann eine Waage sein und die stromabwärts angeordnete Benutzerstation ist eine Frankiermaschine. Für die zur Gewichtsbestimmung erforderliche Messzeit muss ein kontinuierlich bewegter Brief vollständig von der Waage aufgenommen werden. Bei Mischpost ist die Wahrscheinlichkeit größer, dass die Waage ein falsches Messergebnis ermittelt. In Abhängig-keit von den Abmaßen des Briefes wird die Messzeit erhöht. Dazu ist eine komplizierte Steuerung, welche die Abmaße der Briefe im Voraus auswertet, und steuerbare Motoren erforderlich. Alternativ könnte zwar die Wiegestrecke vergrößert und ein Aussteuerfach angeordnet werden. Das würde jedoch die Länge des gesamten Postverarbeitungssystems erhöhen, was ohne eine größere Umrüstung jedoch nicht möglich ist.

Gemäß der EP 514 107 B1 wird von einer Steuereinrichtung bei großen und schwer zu wiegenden Briefen der Transport solange unterbro-chen, bis die Messung stabil ist. Die Messung erfolgt im statischen Zustand der dynamischen Waage. In der Waage ist nahe dem stromabwärts gerichteten Transportbandende ein Detektor angeordnet, welchen nur Briefe durchlaufen, deren Gewicht bis zu diesem Zeitpunkt bestimmt worden ist. Bei kurzer Wiegestrecke und ungleich verteilter Masse im Brief oder hoher Transportgeschwindigkeit massereicher Briefe treten Messfehler auf. Außerdem kann bei einem Stop der Brief durch seine Massenträgheit vom Wiegeteller rutschen. Deshalb sind die Abmaße des Wiegetellers etwas größer ausgelegt bzw. die Transportgeschwindigkeit kleiner festgelegt. Der Durchsatz bei Mischpost ist entsprechend verringert.

Aus der DE OS 37 31 494 (US 4,753,432) ist es bekannt, zum Wiegen eine Ruhezeit zu schaffen, wobei der Betrieb des Frankiersystems und des Transportsystems unterbrochen werden, weil letztere sonst eine zu hohe Vibration liefern würden. Die Transportzeit vom Waagemodul zur Frankiermaschine ist zwar klein gewählt. Aber einerseits kann die Geschwindigkeit nicht beliebig vergrößert werden, um die Staugefahr nicht zu vergrößern. Andererseits ist die erzielbare Taktleistung durch in den Ablauf eingefügte Pausen begrenzt. Die Geschwindigkeit des Wiegens ist durch die Geschwindigkeit der Gewichtsbestimmung begrenzt. Letztere bereitet bei schweren Briefen einen größeren Aufwand, wenn die Messung genau sein muss.

Im Gegensatz zum halbdynamischen Betrieb ist der dynamische Betrieb für schwere Briefe problematisch. Die Anmelderin hat nun die Masse des Wiegetellers wesentlich gesenkt und dessen Steifigkeit wesentlich erhöht. Daraus resultieren kurze Einschwingzeiten für das gesamte Meßsystem und infolgedessen entsprechend größere Brieftransportgeschwindigkeiten beim dynamischen Betrieb. Weitere Einzelheiten sind in der deutschen Patentanmeldung DE 198 33 767 beschrieben.

Unter dem Ziel, eine effektive Mischpostverarbeitung mit einer dynami-schen Waage in Verbindung mit einer neuentwickelten Frankiermaschine zu garantieren, wobei erstere eine Gewichtsberechnung und letztere die Portowertberechnung ausführt, hat die dynamische Waage einen in Leichtbauweise biege- und verwindungssteif ausgeführten Wiegeteller für die Briefe vorgesehen, der am ungefähren Ort des gemeinsamen Schwerpunktes des Wiegetellers und eines mittig auf dem Wiegeteller angeordneten Briefes mit dem höchstzulässigen Gewicht und den größten zulässigen Abmessungen an eine Wiegezelle angekoppelt ist. Durch die vorgenannte Ankopplung des Wiegetellers an die Wiegezelle sind negative Auswirkungen des Lastarmes minimiert. Durch die Verbesserung der Funktionseigenschaften der dynamischen Waage ist eine Vergrößerung des Einsatzbereiches gegeben.

Ein Verfahren zur Steuerung einer dynamischen Waage, die gemischtes Postgut mit unterschiedlicher Größe und Dicke verarbeiten kann, und die in mindestens zwei Betriebsmoden betrieben werden kann, ist der deutschen Patentanmeldung DE 19860296.0 entnehmbar. Im dynamischen Betriebsmodus wird vor dem Beginn eines ersten Messzeitbereiches ein Postgut unabhängig von seinem Format mit einer auf einem voreingestellten Wert eingestellten Transportgeschwindigkeit zugeführt, wenn sich der Brief im Einlauf der dynamischen Waage befindet. Während des dynamischen Wiegens im Messzeitbereich wird eine Drehzahlregelung von der Steuerung der dynamischen Waage deaktiviert, so dass eine Gewichtsmessung bei deaktivierter Drehzahl-regelung erfolgt. Eine Aktivierung der Drehzahlregelung für den Motor erfolgt erneut, wenn sich der Brief im Auslauf der dynamischen Waage befindet. Der Brief durchläuft anschließend die Frankiermaschine bzw. weitere Verarbeitungsstationen des Postverarbeitungssystems.

Die Waage ist von einem dynamischen auf einen halbdynamischen Betriebsmodus umschaltbar. Wenn die Waage ein ungültiges Mess-ergebnis ermittelt hat, wird eine Rückwärtsbewegung des fehlerhaft gemessenen Briefes innerhalb der Waage ausgelöst. Bei der nun anschließenden halbdynamischen Wägung stoppt die Waage das Transportband solange, bis die Waage ein richtiges Messergebnis ermittelt hat. Dadurch, dass die Waage im statischen bzw. halbdynamischen Betriebsmodus nur für anfangs falsch gewogene Briefe bzw. andere Poststücke arbeitet, verringert sich aber die Taktleistung (Durchsatz an Briefen pro Stunde).

Als Stand der Technik gift auch der Inhalt der Europaïschen Patentanmeldungen EP 1 014 051 A1 und EP 1 014 050 A1 gemäß Art. 54(3/4) EPü.

Es ist die Aufgabe der Erfindung, eine automatische Verarbeitung von Mischpost mit Poststücken auch höheren Gewichtes im dynamischen Betriebsmodus einer Waage zu erreichen, um den Durchsatz an Poststücken pro Stunde zu erhöhen. Ein möglichst hoher Anteil der Post des Postversenders soll im dynamischen Modus gewogen werden, wobei sich manuelle Eingriffe während der Postverarbeitung in der Regel erübrigen.

Die Aufgabe wird mit den Merkmalen des Verfahrens nach Anspruch 1 und mit den Merkmalen einer Anordnung nach Anspruch 7 gelöst.

Es wurde gefunden, dass mit der erfindungsgemäßen Messanordnung ein dynamisches Wiegen in zwei Richtungen, sowohl stromabwärts als auch stromaufwärts grundsätzlich möglich ist. Die Messanordnung der dynamischen Waage ist mit einer Fördereinrichtung für den kontinuierlichen Transport von Briefen gekoppelt. Die Fördereinrichtung im weiteren Transporteinrichtung genannt, bei der die Transportrichtung umkehrbar ist und somit ein Brieftransport sowohl stromaufwärts in Richtung des Systemeinlaufes, als auch stromabwärts zur weiteren Verarbeitungseinrichtung ausführbar ist.
Das Poststück, im weiteren mit Brief bezeichnet wird zur weiteren Verarbeitungsstation stromabwärts mit einer ersten Geschwindigkeit transportiert, wobei eine Gewichtsmessung mit Auswertung auf Plausibilität des Messergebnisses erfolgt. Bei Nichtplausibilität, d. h. das Messergebnis des Briefgewichtes ist nicht plausibel bzw. wird für ungültig erklärt, wird eine dynamische Nachmessung des Gewichtes durchgeführt, wobei der Brief, durch Umkehr der Transportrichtung der Transporteinrichtung stromaufwärts mit einer zweiten Geschwindigkeit bis zum Briefeinlauf in eine vorbestimmte Position zurücktransportiert wird.
Während des Rücktransportes des Briefes wird dessen Gewicht ohne Zwischenstop in einem dynamischen Wiegeschritt bestimmt.
Bei erfolgreicher Nachmessung bei der das Wiegeergebnis plausibel ist, wird der Brief ohne ein weiteres Wiegen zur weiteren Verarbeitungsstation stromabwärts abtransportiert. Der Abtransport kann mit einer für die dynamische Waage vorgebbaren maximalen Geschwindigkeit erfolgen, die größer als die erste und zweite Geschwindigkeit ist.

Sollte die Messzeit nicht ausreichen oder ist das Messergebnis der Nachmessung nicht plausibel ist, kann eine weitere Nachmessung erfolgen. Der Brief wird bei Erreichen der vorbestimmten Position im Briefeinlauf, durch nochmalige Umkehr der Transporteinrichtung, ein zweitesmal stromabwärts mit einer dritten Geschwindigkeit über das Waagesystem transportiert, wobei die dynamische Waage das Gewicht des Briefes durch eine weitere Nachmessung während des Transportes bestimmt. Ist das Ergebnis der Nachmessung plausibel bzw. gültig erfolgt der Abtransport des Briefes zur nächsten Verarbeitungsstation mit der Geschwindigkeit die für den Systemdurchlauf ohne Störeinflüsse voreingestellt ist.

Eine weitere Möglichkeit der Erfindung ist, dass bei Feststellung eines Wiegewertes der nicht plausibel ist, dass Wiegesystem im dynamischen Zustand zu belassen, aber beim zurücktransportieren des Briefes durch Umkehr der Transportrichtung der Transporteinrichtung keine Gewichtsbestimmung durchzuführen, um die Eigenschwingungen des Wiegesystems weiter zu dämpfen. Erst wenn der Brief die vorbestimmte Position im Einlaufbereich erreicht hat und der Transport des Briefes stromabwärts durch die Transportreinrichtung erneut aufgenommen wurde, wird eine Widerholung der Gewichtsbestimmung des Briefes während des Transportes durchgeführt.

Während des Briefdurchlaufes erfassen Sensoren den Brief in seiner jeweiligen Position. Die Durchführung der Plausibilitätsprüfung ist der DE 19860296 beschrieben. Mit der Erfindung ist gewährleistet, dass ein hoher Anteil des Postaufkommens des Postversenders dynamisch erfolgt. Manuelle Eingriffe sind nur dann noch erforderlich, wenn andere Fehler aufgetreten sind, die das Schwingungsverhalten des Wiegesystems negativ beeinflusst haben, wie zum Beispiel Stöße oder unsachgemäße Behandlung der Systemkomponenten..

Für die Realisierung der Erfindung ist es ohne Belang, ob die Briefe senkrecht oder waagerecht transportiert werden. Die Erfindung ist nicht auf an sich bekannte Wiegeverfahren beschränkt. Es kann eine Wiegezelle mit alten oder auch neuen Wiegeverfahren zur Anwendung kommen. Die an die Waage angekoppelte weitere Verarbeitungsein-richtung erhält gewogene Briefe von einer Transporteinrichtung der dynamischen Waage. Eine Steuereinheit ist mit einer Wiegezelle, Sensoren und der Transporteinrichtung verbunden . Letztere ist für einen Zwei-Richtungstransport ausgebildet. Es ist vorgesehen, dass Sensoren für die Rückmeldung der Briefposition im Transportweg angeordnet sind, die Transporteinrichtung in der dynamischen Waage einen steuerbaren Antrieb umfasst und die Steuereinheit einen Mikroprozessor aufweist, der mit einem Programmspeicher und einem nichtflüchtigen Speicher verbunden ist, wobei der Mikroprozessor derart programmiert ist, dass der Brief stromaufwärts in Richtung der ersten Verarbeitungsstation mit einer zweiten Geschwindigkeit oder stromabwärts in Richtung der weiteren Verarbeitungsstation mit einer ersten Geschwindigkeit transportiert wird. Der Mikroprozessor schaltet in Abhängigkeit vom Ergebnis der Gewichtsbestimmung vom ersten auf einen zweiten Betriebsmodus. Ist das Messergebnis gültig wird im ersten Betriebsmodus der Brief an eine weitere Verarbeitungseinrichtung abgegeben.

Falls die Messung ungültig ist, wird automatisch auf einen zweiten Betriebsmodus umgeschaltet. Im zweiten Betriebsmodus wird der Brief stromaufwärts in Richtung der ersten Verarbeitungsstation mit einer zweiten Geschwindigkeit transportiert und nachgewogen oder entsprechend bei sehr schlechtem Schwingungsverhalten des Wiegesystems ohne zu wiegen direkt zur vorbestimmten Position im Einlaufbereich zurücktransportiert. Erst nach Wiederaufnahme der Transportrichtung des Briefes mit einer dritten Geschwindigkeit stromabwärts, wird dieser dynamisch nachgewogen. Der Mikroprozessor bestimmt die Höhe der zweiten und dritten Geschwindigkeit abhängig davon, inwieweit im ersten Betriebsmodus die Messanordnung mit der Wiegezelle bereits auf das Gewicht eingeschwungen worden ist.

Es ist vorgesehen, dass die zweite und dritte Geschwindigkeit betragsmäßig verschieden oder gleich der ersten ist, jedoch kleiner als eine maximale Geschwindigkeit ist, mit der ein Brief stromabwärts in Richtung der weiteren Verarbeitungsstation ohne Gewichtsbestimmung abtransportiert wird.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Perspektivische Ansicht einer dynamischen Waage von vorn,
- Figur 2,: Blockschaltbild der Steuerung einer dynamischen Waage,
- Figur 3,: Geschwindigkeit/Zeit-Diagramm für die Steuerung der dynami-schen Waage - Nachwiegen stromaufwärts,
- Figur 4a,: Flussdiagramm für die Steuerung der dynamischen Waage, Nachwiegen stromaufwärts
- Figur 4b,: Flussdiagramm für die Steuerung der dynamischen Waage Nachwiegen stromabwärts
- Figur 5,: Teilablaufplan Überlast und Abschaltkriterium.
- Figur 6,: Geschwindigkeit/Zeit-Diagramm für die Steuerung der dynamischen Waage - Nachwiegen stromabwärts

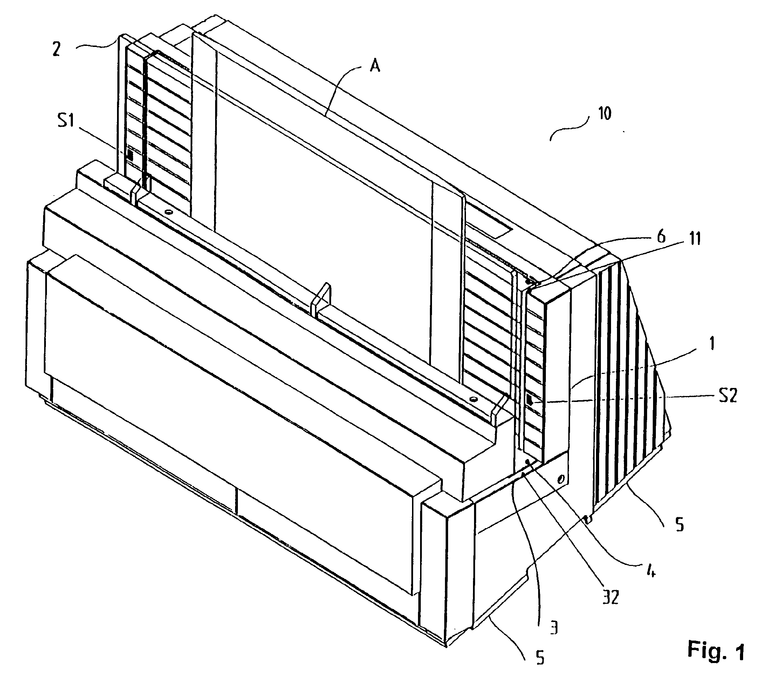

In der Figur 1 wird eine perspektivische Ansicht einer dynamischen Waage 10 dargestellt, welche für den Transport von auf der Kante stehenden Briefen A ausgebildet ist. Letztere liegen an einem Wiegeteller 6 an, der in einer hinteren Führungswand 1 der Waage in einer Ausnehmung 11 angeordnet ist. Beidseitig der Ausnehmung 11 für den Wiegeteller 6 sind in der hinteren Führungswand 1 Sensoren S1 und S2 angeordnet. Grundsätzlich sind Gabellicht- oder Lichtreflexlichtschranken geeignet, welche die Hinter- bzw. Vorderkante eines Briefes A detektieren, wenn er auf den Wiegeteller 6 transportiert wird. Der Sensor S1 ist stromaufwärts nahe dem Beginn des Weges des Briefes A auf dem Wiegeteller (in Transportrichtung gesehen) angeordnet. In Höhe einer unteren Führungswand 3 der Waage liegt eine Transporteinrichtung 4 mit einem - nicht sichtbaren - Transportband 41. Die hintere Führungswand 1 ist leicht, vorzugsweise 18° zur Senkrechten, nach hinten geneigt. Das entspricht einem bereits ermittelten Optimierungswinkel für eine automatische Briefzuführung und eine Frankiermaschine (DE 196 05 014 C1 und DE 196 05 015 C1). Die untere Führungswand 3 ist orthogonal zur hinteren und demzufolge auch zur vorderen Abdeckplatte 2 angeordnet. Damit wird eine definierte Brieflage und eine harmonische Anpassung an die vor- und nachgeordneten Geräte erreicht. Die vordere Abdeckplatte 2 besteht beispielsweise aus Plexiglas. Alle genannten Baugruppen bzw. Teile sind über entsprechende Zwischenstücke auf einem Chassis 5 befestigt. Weitere Einzelheiten zum konstruktiven Aufbau der Waage sind der deutschen Patentanmeldung DE 198 33 767.1 zu entnehmen.

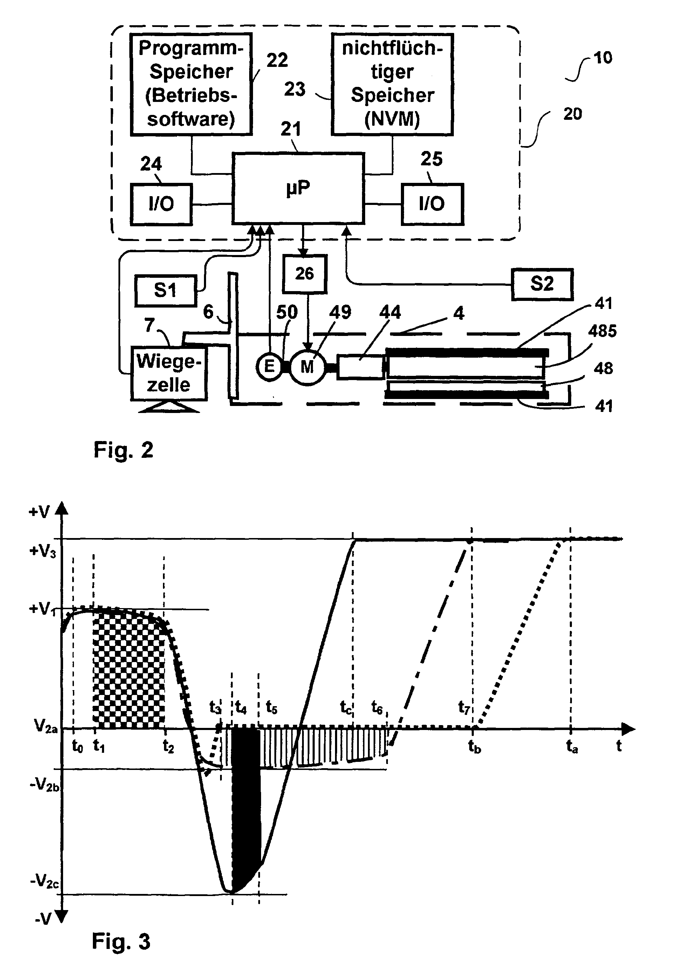

Anhand der Figur 2 wird das Blockschaltbild der Steuerung einer dynami-schen Waage und das Blockschaltbild der Steuerung einer Frankierein-richtung erläutert. Die Steuereinheit 20 einer dynamischen Waage 10, weist einen Mikroprozessor 21 auf, welcher mit einem Programmspeicher 22, mit einem nichtflüchtigen Speicher 23 sowie mit Schnittstellen zur Ein- und Ausgabe 24, 25 verbunden ist. Im nichtflüchtigen Speicher 23 ist jeweils zugehörig zu vorbestimmten Geschwindigkeiten ein zugehöriger Satz an Parametern für die Auswertung der Messwerte gespeichert. Der Mikroprozessor 21 hat einen internen und ggf. einen zusätzlichen externen Arbeitsspeicher. Alternativ ist ein Mikrocontroller mit intergrierten Speichern einsetzbar. Der Mikroprozessor 21 ist ausgangsseitig mit einem Motor 49 der Transporteinrichtung 4 der dynamischen Waage 1 über einen Treiber 26 und eingangsseitig mit einem Encoder 50, mit Sensoren S1, S2 sowie mit einer Wiegezelle 7 betriebsmäßig verbunden, um Sensorsignale, Encodersignale und Gewichtsdaten zu empfangen und um Steuerbefehle an die Transporteinrichtung 4 zu senden.
Es ist vorgesehen, dass der Motor 49 in der Transporteinrichtung 4 der Waage 10 ein in der Drehrichtung umschaltbarer Motor 49 mit steuerbarer Drehzahl zur Einstellung der Transportgeschwindigkeit und zur Änderung der Transportrichtung ist. Die Transporteinrichtung 4 enthält vorzugsweise einen Gleichstrommotor, welcher mit Gleichstromimpulsen gespeist wird, wobei sich aufgrund des Verhältnisses der Impulslänge zur Impulspause eine bestimmte Drehzahl einstellt. Der Motor 49 treibt eine Antriebsrolle 485. Letztere kann direkt auf den Brief einwirken oder indirekt, vorzugsweise über ein Transportband 41, welches mit einer Spannvorrichtung 48 gespannt werden kann.
Im ersten Betriebsmodus für den dynamischen Betrieb der Waage führt die Transporteinrichtung 4 eine Vorwärtsbewegung des betreffenden Briefes A innerhalb der Waage stromabwärts mit einer bestimmten ersten Geschwindigkeit aus, welche die Transportgeschwindigkeit in der weiteren Verarbeitungsstation nicht übersteigt.
Durch die Steuereinheit 20 können entsprechende Steuerbefehle generiert werden, durch welche in einem zweiten Betriebsmodus eine zweite Geschwindigkeit erzeugt wird, um ggf. die Transportgeschwin-digkeit in der Waage soweit zu verlangsamen, so dass genügen Messzeit für eine dynamische Messung zur Verfügung steht. Im zweiten Betriebsmodus für den dynamischen Betrieb der Waage führt die Transporteinrichtung 4 eine Rückwärtsbewegung des betreffenden Briefes innerhalb der Waage 10 stromaufwärts mit der bestimmten zweiten Geschwindigkeit aus. Der mit Gleichstromimpulsen gespeiste Motor 49 liefert aufgrund des Verhältnisses der Impulslänge zur Impulspause eine bestimmte Drehzahl, wodurch sich auf dem Transportband 41 eine bestimmte Geschwindigkeit einstellt. Der Brief A wird stromaufwärts bis zu einer vorbestimmten Position im Einlaufbereich während des Rücktransportes dynamisch ein zweitesmal gewogen. Der Mikroprozessor 21 schaltet in Abhängigkeit vom Ergebnis der ersten nichtplausiblen Gewichtsbestimmung die Geschwindigkeit der Rückwärtsbewegung des Briefes A. Die Höhe der Transportgeschwindigkeit ist abhängig davon, inwieweit bei der ersten Messung die Messanordnung mit der Wiegezelle 7 bereits auf das Gewicht eingeschwungen worden ist. Nach Erfassung des rücktransportierten Briefes A durch den Sensor S1 kehrt der Antrieb bestehend aus Getriebe 44 und Motor 49 die Transportrichtung erneut um. Durch den Mikroprozessor 21 wird der Antrieb gesteuert, indem die Transportgeschwindigkeit für den Abtransport größer als die erste Geschwindigkeit eingestellt wird oder eine dritte Geschwindigkeit für eine Wiederholung der Gewichtsbestimmung eingestellt wird. In bekannter Weise kann die Transportgeschwindigkeit für die Wiederholungsmessung verlangsamt eingestellt werden. Dadurch können Vibrationseinflüsse hervorgerufen durch schwere Briefe und stochastische Einflüsse, wie Schwingungsstöße am Aufstellort der dynamischen Waage 10 vermindert werden. Bei erfolgreicher Gewichtsbestimmung wird der Brief A mit einer an die Postverarbeitung angepassten Transportgeschwindigkeit zu einer weiteren Verarbeitungseinrichtung vorzugsweise einer Frankiermaschine befördert.
Der Motor 49 liefert aufgrund des Verhältnisses der Impulslänge zur Impulspause eine bestimmte Drehzahl, wodurch sich auf der Transporteinrichtung eine bestimmte Geschwindigkeit einstellt.

In einer weiteren Ausführungsform ist vorgesehen, dass die Transporteinrichtung 4 der Waage 10 einen umschaltbaren Antrieb und dass die Steuerung 20 den Treiber 26 umfasst, der zwischen Antrieb und der Steuerung geschaltet ist, womit die Transportrichtung der Waage umgekehrt werden kann, um im zweiten Betriebsmodus den Brief an den Anfang des Wiegetellers 6 zurückzutransportieren und um während des Rücktransportes eine Nachwiegung auszuführen. Der Treiber 26 kann auch als Relais ausgebildet sein. Die von der Steuereinheit 20 ausgehenden Steuersignale steuern das Relais an, welches die Spannung für die Antriebsmotoren der Transporteinrichtung schaltet. Der Motor 49 ist ggf. über ein geeignetes Getriebe 44 mit der Antriebsrolle 485 verbunden. Das Getriebe 44 kann sowohl ein Zahnradgetriebe als auch ein Riemengetriebe sein.

In einer alternativen Ausführung, umfasst die Transporteinrichtung 4 der Waage einen Motor mit umschaltbaren Getriebe, dass in eine andere Übersetzung und Drehrichtung geschaltet werden kann.

Die Gewichtsbestimmung erfolgt im ersten Betriebmodus, während des Messzeitbereiches, in welcher der Brief A stromabwärts in Richtung der weiteren Verarbeitungsstation mit einer ersten Geschwindigkeit transportiert wird. Im Messzeitbereich werden gemessene Messwerte der Größe nach sortiert und ein mittig liegender Messwert ermittelt. Im Ergebnis der Gewichtsbestimmung wird ein ermittelter Messwert für gültig erklärt, wenn vorbestimmte Grenzwerte und Abschaltkriterien nicht überschritten wurden. Weitere Einzelheiten zur Gewichtsbestimmung in der Waage sind der DE 198 60 294.4 A zu entnehmen.

Die Überschreitung der Abschaltkriterien ist ein Maß dafür, inwieweit im ersten Betriebsmodus die Messanordnung mit der Wiegezelle bereits auf das Gewicht eingeschwungen worden ist. Wenn im ersten Betriebsmodus die Messanordnung mit der Wiegezelle nicht ausreichend auf das Gewicht eingeschwungen ist, dann wird im zweiten Betriebsmodus der Brief A stromaufwärts mit einer zweiten Geschwindigkeit zurücktransportiert, die kleiner als die erste Geschwindigkeit ist. Wenn im ersten Betriebsmodus zwar die Messanordnung mit der Wiegezelle bereits auf das Gewicht eingeschwungen ist, aber das Prüfergebnis nicht plausibel ist, dann wird im zweiten Betriebsmodus der Brief stromaufwärts mit einer zweiten Geschwindigkeit zurücktransportiert, die größer oder gleich als die erste Geschwindigkeit sein kann. Wird das Briefgewicht plausibel bestimmt, wird der Brief A in einer vorbestimmten Position im Einlaufbereich abgestoppt und mit einer auf die dynamische Waage (10) abgestimmten maximalen Geschwindigkeit zur Frankiermaschine abtransportiert. Ist der Gewichtswert nicht plausibel, wird der Brief A mit einer Geschwindigkeit gleich oder kleiner der ersten Geschwindigkeit während des Transportes stromabwärts zur Frankiermaschine erneut gewogen.

Die Figur 3 zeigt ein Geschwindigkeit/Zeit-Diagramm für die Steuerung der dynamischen Waage für den Fall, dass nach dem Wiegen ein Nach-wiegen erforderlich wird. Die Waage befindet sich im ersten Betriebs-modus, wenn zum Zeitpunkt t₀ ein Brief A mit einer (positiven) Transportgeschwindigkeit V₁ zugeführt wird. Die Messung (Schachbrett-muster) beginnt mit dem Zeitpunkt t₁ und endet zum Zeitpunkt t₂. Zum Zeitpunkt t₁ sind Eingangsstöße auf den Wiegeteller 6 bei Briefzuführung in der Regel bereits abgebaut. Ein Nachwiegen wird erforderlich, wenn die Eingangsstöße auf den Wiegeteller 6 bei Briefzuführung noch nicht oder nicht weit genug abgebaut sind. Bei der Auswertung der Meßwerte wird ein solches Erfordernis erkannt. Gerade massereiche Briefe schießen am Briefauslauf wenigstens teilweise über das Hinterende der Waage hinaus. Die Transportgeschwindigkeit V₁ wird deshalb auf die Geschwindigkeit V₂ₐ = 0 reduziert und dann wird der Brief stromaufwärts zurücktransportiert (negative Geschwindigkeit) und zwar mindestens solange, bis der Sensor S₂ detektiert, dass die Briefvorderkante den Briefauslauf 32 wieder ver-lässt. Die Transportgeschwindigkeit wird dann wieder auf die Geschwindigkeit V₂ₐ = 0 reduziert. Die - in der Figur 3 gezeigte - punktierte Linie zeigt ein statisches Nachwiegen beginnend ab dem Zeitpunkt t₃ und endend zum Zeitpunkt t₇. Der stromabwärts angeordneten Frankierma-schine kann der Brief A erst zum Zeitpunkt tₐ übergeben werden. Ein stati-sches Nachwiegen im zweiten Betriebsmodus ist auch der DE 198 60 294.4 zu entnehmen und soll hier nicht weiter ausgeführt werden.

Erfindungsgemäß kann nun ein dynamisches Nachwiegen in einem zweiten Betriebsmodus erfolgen, wenn der Brief A stromaufwärts mit einer zweiten (negativen) Geschwindigkeit zum Einlaufbereich zurücktransportiert und gewogen wird. Das dynamische Nachwiegen ist als Strichmuster-Fläche dargestellt und beginnt mit dem Zeitpunkt t₃ und endet zum Zeitpunkt t₆, wobei die zweite Geschwindigkeit V_{2b} betragsmässig kleiner als die erste Geschwindigkeit V₁ des ersten Betriebsmodus ist. Der Brief wird zum Zeitpunkt t_{b} übergeben. Das dynamisches Nachwiegen ist als schwarze Fläche dargestellt und beginnt mit dem Zeitpunkt t₄ und endet zum Zeitpunkt t₅, wobei die zweite Geschwindigkeit V_{2c} betragsmässig grösser als die erste Geschwindigkeit V₁ des ersten Betriebsmodus ist. Der Brief wird zum Zeitpunkt t_{c} einer Frankiermaschine übergeben, wobei gilt: Zeitpunkt t_{c} < t_{b} < tₐ.

In einer weiteren Ausführung erfolgt ein erneutes dynamisches Nachwiegen nachdem der Brief A mit einer zweiten (negativen Geschwindigkeit) zunächst zum Einlaufbereich bis zu einer vorbestimmten Position zurücktransportiert wird, von der sich eine ausreichende Wegstrecke stromabwärts in Richtung der nächsten Verarbeitungseinrichtung erstreckt, um zuverlässig im dynamischen Betrieb der dynamischen Waage 10 eine Gewichtsbestimmung des Briefes A nochmals zu wiederholen, falls durch die Messung beim Vorwärtstransport kein plausibler Gewichtswert bestimmt werden konnte.

Der Sensor S1 im Einlaufbereich gibt nach Erkennen der Briefposition, anhand der Briefkante des Briefes A , ein entsprechendes Signal an die Steuereinheit 20 aus, welches bewirkt, dass der Motor 49 mit umgekehrter Drehrichtung angetrieben wird und den Brief A mit maximaler Geschwindigkeit stromabwärts zur nächsten Verarbeitungseinrichtung abtransportiert, wenn ein plausibler Gewichtswert bestimmt wurde oder
mit einer Geschwindigkeit kleiner oder gleich der ersten Geschwindigkeit, wenn nach der ersten Gewichtsbestimmung kein plausibler Gewichtswert vorliegt.

Eine weitere Ausführung sieht vor, dass die Steuerung 20 abhängig davon inwieweit die Messanordnung mit der Wiegezelle bereits auf das Gewicht des Briefes A eingeschwungen ist , die Nachmessung mit höherer Transportgeschwindigkeit des Briefes erfolgt.

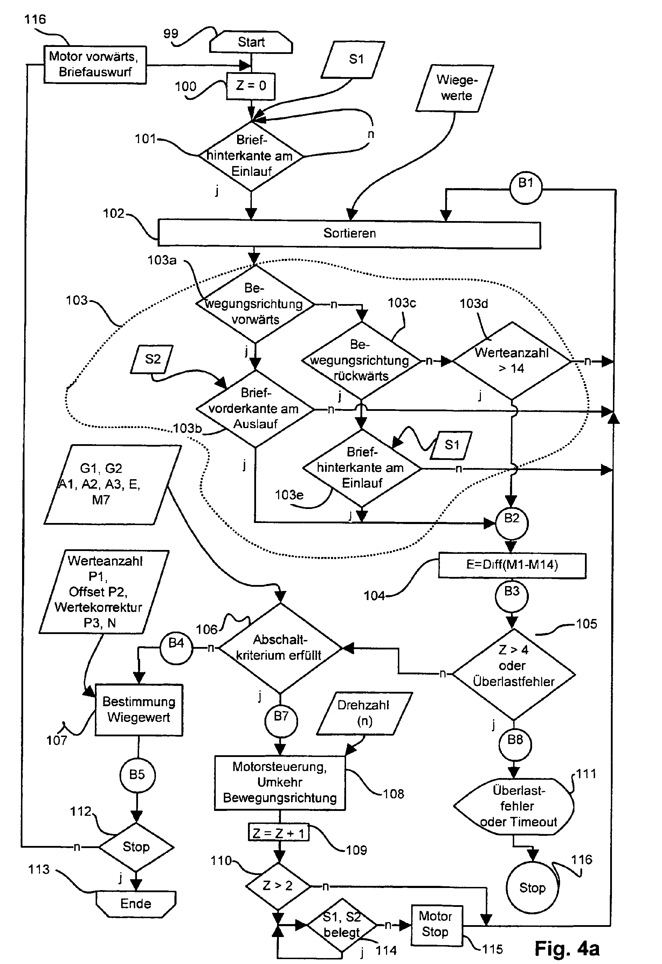

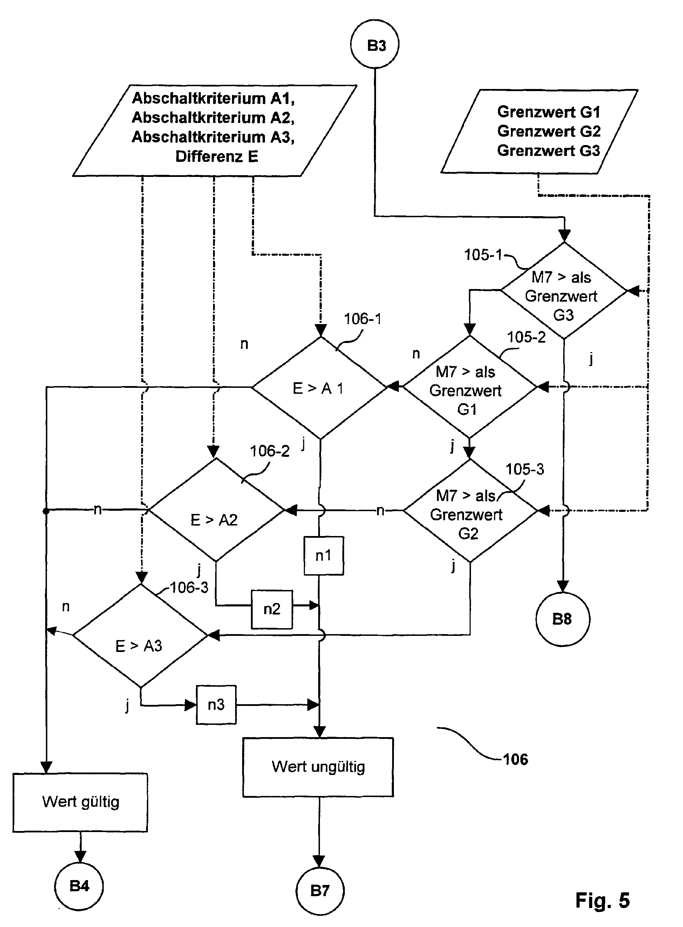

Die Figur 4a zeigt das Flussdiagramm für die Steuerung der dynamischen Waage. Der Mikroprozessor kann mittels des Sensors S1 am Briefeinlauf die Briefvorderkante feststellen und startet (im Schritt 99) den Ablauf. Zunächst wird im Schritt 100 ein Rundenzähler auf Z = 0 gesetzt. Ständig werden Wiegemesswerte von der Wiegezelle 7 zwecks Gewichtsbestim-mung geliefert. Der Mikroprozessor hat mittels des Sensors S1 am Brief-einlauf die Briefhinterkante erkannt (im Schritt 101) und startet (Punkt B1) das Unterprogramm Sortieren (im Schritt 102) der Wiegemesswerte M1, M2, M3, ..., M7, ..., Mx, ... M14, welches deutschen Patentanmeldung DE 198 60 294.4 zu entnehmen ist. Durch einen Parameter P3 kann eine vorbestimmte Anzahl an zum Beispiel P3 =14 letzten Messwerten M1 bis M14 vorgegeben werden. Vom Schritt 102 wird auf einen Subschritt 103a des Auswerteschritts 103 verzweigt. Wenn die Bewegungsrichtung vorwärts (stromabwärts) eingestellt ist, wird auf einen Subschritt 103b verzweigt. Nach einem Zeitablauf, wenn der Brief stromabwärts transportiert wird, erkennt der Mikroprozessor mittels des Sensors S2 am Briefauslauf 32 die Briefvorderkante (im Schritt 103b) und verzweigt auf eine Schritt 104. Der ab dem Bezugspunkt B1 für eine Erfassung der vorbestimmte Anzahl an letzten Messwerten verstrichene Zeitbereich wird als Messzeitbereich T1 bezeichnet. Der Mikroprozessor bildet nun einen Entscheidungsparameter E im Schritt 104 als Differenzwert zwischen dem sortierten größten und kleinsten Wert.
Wenn die Briefvorderkante am Auslauf im Subschritt 103b noch nicht detektiert wurde, dann wird auf einen Bezugspunkt B1 am Eingang des Sortierschrittes 102 zurück verzweigt.
Wenn die Bewegung auf Null oder rückwärts (stromaufwärts) eingestellt ist, wird vom Subschritt 103a auf einen Subschritt 103c des Auswerteschritts 103 verzweigt. Bei einer auf Null reduzierten Bewegung wird auf vom Subschritt 103c auf den Subschritt 103d des Auswerte-Schrittes 103 verzweigt und ein halbdynamisches Wiegen durchgeführt. Anderenfalls wird ein dynamisches Wiegen während des Rückwärts-fahrens durchgeführt und auf den Subschritt 103e des Auswerteschritts 103 verzweigt. Wenn die Briefvorderkante am Auslauf im Subschritt 103b oder die Briefhinterkante am Einlauf im Subschritt 103e noch nicht detektiert wurde, dann wird auf einen Bezugspunkt B1 am Eingang des Sortierschrittes 102 verzweigt. Anderenfalls, d.h. nach der Erfassung der Wiegemesswerte M1 bis Mx oder M1 bis Mi ≥ M14, deren Anzahl wieder durch den Parameter P3 vorgegeben wird, wird ein Bezugspunkt B2 erreicht. Nun kann wieder der Entscheidungsparameter E im Schritt 104 als Differenzwert zwischen dem sortierten größten und kleinsten Wert ge-bildet werden. Anschließend wird ein Bezugspunkt B3 erreicht und der Mikroprozessor startet nun die Abfrage nach mindestens einer Überlast im Schritt 105. Der Messwert M7 liegt beispielsweise der Größe nach in der Mitte zwischen dem größten und kleinsten Wert und wird mit dem höchsten Überlastgrenzwert G3 verglichen. Zusätzlich wird der Runden-zähler nach Z > 4 auf Überschreitung (Timeout) abgefragt. Ist ein Kriterium erfüllt, d.h. Überlast oder Z > 4 wird der Punkt B8 erreicht. Ein gegebenenfalls vorliegender Überlastfehler oder Timeout wird (im Schritt 111) weiter ausgewertet und die Waage gestoppt. Liegt keine Überlast oder Timeout vor, dann wird in einem weiterem Abfrageschritt 106 festgestellt, ob der Wert gültig oder ungültig ist. Dazu wird ein Unter-programm aufgerufen, das anhand der Figur 5 näher erläutert wird. Der Differenzwert E aus dem ersten M1 und vierzehnten sortierten Messwert M14 soll innerhalb des Gewichtsbereichs eines der Abschaltkriterien A1, A2 oder A3 liegen. Er liegt beispielsweise innerhalb eines vom zweiten Abschaltkriterium A2 definierten Bereiches und ergibt somit gültige Mess-werte. Das Abschaltkriterium A1 gilt für leichte Briefe, das Abschaltkriterium A2 gilt für mittelschwere Briefe und das Abschaltkriterium A3 gilt für schwere Briefe. Wenn die Überprüfung der Überschreitung der Grenzwerte und Abschaltkriterien die Gültigkeit des mittig liegenden Messwertes M7 ergeben hat, ist keines der Abschaltkriterien erfüllt (Bezugspunkt B4). Da keines der Abschaltkriterien erfüllt ist kann nun zur Bestimmung des Wiegewertes auf den Schritt 107 verzweigt werden, in welchen ein Unterprogramm aufgerufen und abgearbeitet wird (Bezugs-punkt B5). Bei erfolgreicher Gewichtsbestimmung im Schritt 107 erfolgt in einem Subschritt 116 der Briefauswurf und die Übergabe des Wiege-ergebnisses an die Frankiermaschine. Außerdem wird der Motor 49 oder das Getriebe 44 auf die Bewegungsrichtung vorwärts (stromabwärts) eingestellt. Das Unterprogramm ist ebenfalls der vorgenannten Patentanmeldung DE 198 60 294.4 zu entnehmen. Wenn die Waage (beispielsweise manuell) nicht gestoppt wird, was im Schritt 112 abgefragt wird, dann wird vom Schritt 112 auf den Schritt 100 zurückverzweigt. Bei einem festgestellten Stopp-Befehl wird das Ende des Betreibens der Waage erreicht (Schritt 113).
Anderenfalls, bei ungültigen Messwerten, d.h. wenn die Überprüfung der Überschreitung der Abschaltkriterien im Schritt 106 ergeben hat, dass wenigstens ein Abschaltkriterium erfüllt ist, wobei ggf. zusätzlich ein Grenzwert überschritten sein kann, dann wird der Bezugspunkt B7 erreicht und auf den Schritt 108 verzweigt, wo die Motorsteuerung 20, 26, 44, 49 umgeschaltet wird, hier um den Rücktransport des Briefes in eine Wiegeposition zu veranlassen und um dann ein Nachwiegen beim Rückwärtsfahren durchzuführen. Je nachdem, ob die Überprüfung im Schritt 106 eine Überschreitung der Abschaltkriterien A1, A2 oder A3 ergeben hat, wird vom Mikroprozessor ein Sollwert n1, n2, n3 für eine Drehzahlsteuerung vor dem Umschalten in den zweiten Betriebsmodus ausgewählt und eingegeben (Bezugspunkt B7). Die aktuelle Drehzahl n wird vom Encoder 50 festgestellt und zur Drehzahlregelung im Schritt 108 verwendet. Die (nicht dargestellte) Drehzahlregelung ist im eigentlichen Messintervall für den Nachwiegemodus abgeschaltet. Vom Schritt 108 wird dann über die Schritte 109 und 110 auf den Bezugspunkt B1 zum Sortierschritt 102 zurückverzweigt und dann über die Abfrageschritte 103a, 103c, 103e zum Schritt 104 zur Differenzbildung im Nachwiegemodus verzweigt. Der Zählwert des Rundenzählers wird im Schritt 109 incrementiert Z = Z + 1. Die Messauswertung beginnt mit der Verzweigung zum Bezugspunkt B1. Zuvor kann mittels des Sensors S2 (im optionalen nicht dargestellten Schritt 117) durch den Mikroprozessor erkannt werden, dass die Briefvorderkante den Auslauf 32 der Waage nicht mehr bedeckt. Die von der Wiegezelle 7 gelieferten Messwerte Mx werden im Schritt 102 sortiert und gespeichert. Das Messintervall wird rückwirkend bestimmt für x-Messwerte, welche ab Erreichen des Einlaufes noch gespeichert sind. Im Schritt 103e wird deshalb mittels des Sensors S1 ausgewertet, ob die Briefhinterkante am Einlauf angelangt ist. Der Einlauf (in Fig.1 nicht sicht-bar) ist ähnlich dem Auslauf 32 an der Waage geformt. Wenn die Brief-hinterkante am Einlauf noch nicht angelangt ist, dann wird vom Schritt 103e auf den Bezugspunkt B1 am Beginn des Schrittes 102 zurückver-zweigt. Wenn die Briefhinterkante am Einlauf angelangt ist, dann wird der Bezugspunkt B2 am Beginn des Schrittes 104 zur Differenzbildung im Nachwiegemodus erreicht. Nach Durchlaufen der Abfrageschritte 105 und 106 wird der Bezugspunkt B4 erreicht, wenn keine Überschreitung des Überlastwertes oder des Rundenkriteriums (Time out) oder der Abschalt-kriterien festgestellt wird. Anderenfalls, wenn eine Überschreitung der Abschaltkriterien festgestellt wird, ist der Bezugspunkt B7 erreicht. Die Motorsteuerung schaltet um auf die Bewegungsrichtung vorwärts (strom-abwärts). Nach Inkrementierung Z = Z +1 im Schritt 109 wird im Folge-schritt 110 mittels Mikroprozessors festgestellt, dass die Rundenzahl Z > 2 des Rundenzählers erreicht ist und es wird im Schritt 114 überprüft, ob die Sensoren S1, S2 im Ein-/Auslauf der Waage noch bedeckt sind. Ist das der Fall, dann wird in einer Warteschleife gewartet, bis der Brief durch die Transportrichtungsumschaltung bedingt, den Ein-/Auslauf der Waage nicht mehr belegt, d.h. sich nur auf dem Wiegeteller befindet. Nun wird im Schritt 115 ein Motor stopp (n = 0) eingestellt und es beginnt ein dritter Betriebsmodus für ein halbdynamisches Wiegen, wobei direkt auf den Bezugspunkt B1 verzweigt wird. Die Messung endet nach Stop 112 mit einem plausiblen oder bei Stop 116 mit einen nicht plausiblen Ergebnis.

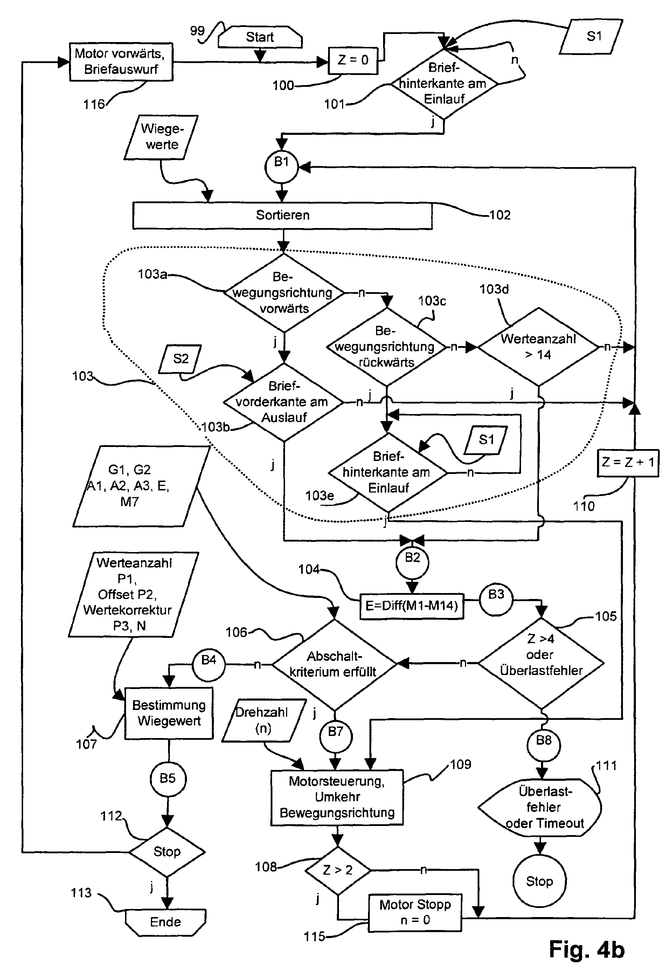

Die Figur 4b zeigt das Flussdiagramm für die Steuerung der dynamischen Waage. Der Mikroprozessor kann mittels des Sensors S1 am Briefeinlauf die Briefvorderkante feststellen und startet (im Schritt 99) den Ablauf. Zunächst wird im Schritt 100 ein Rundenzähler auf Z = 0 gesetzt. Ständig werden Wiegemesswerte von der Wiegezelle 7 zwecks Gewichtsbestim-mung geliefert. Der Mikroprozessor hat mittels des Sensors S1 am Brief-einlauf die Briefhinterkante erkannt (im Schritt 101) und startet (Punkt B1) das Unterprogramm Sortieren (im Schritt 102) der Wiegemesswerte M1, M2, M3, ..., M7, ..., Mx, ... M14, welches der deutschen Patentanmeldung DE198 60 294.4 zu entnehmen ist. Durch einen Parameter P3 kann eine vorbestimmte Anzahl an zum Beispiel P3 =14 letzten Messwerten M1 bis M14 vorgegeben werden. Vom Schritt 102 wird auf einen Subschritt 103a des Auswerteschritts 103 verzweigt. Wenn die Bewegungsrichtung vorwärts (stromabwärts) eingestellt ist, wird auf einen Subschritt 103b verzweigt. Nach einem Zeitablauf, wenn der Brief stromabwärts transportiert wird, erkennt der Mikroprozessor mittels des Sensors S2 am Briefauslauf 32 die Briefvorderkante (im Schritt 103b) und verzweigt auf eine Schritt 104. Der ab dem Bezugspunkt B1 für eine Erfassung der vorbestimmte Anzahl an letzten Messwerten verstrichene Zeitbereich wird als Messzeitbereich T1 bezeichnet. Der Mikroprozessor bildet nach letzterem einen Entscheidungsparameter E im Schritt 104 als Differenzwert zwischen dem sortierten größten und kleinsten Wert. Wenn die Briefvorderkante am Auslauf im Subschritt 103b noch nicht detektiert wurde, dann wird auf einen Bezugspunkt B1 am Eingang des Sortierschrittes 102 zurückverzweigt.

Wenn die Bewegung auf Null oder rückwärts (stromaufwärts) eingestellt ist, wird vom Subschritt 103a auf einen Subschritt 103c des Auswerteschritts 103 verzweigt. Bei einer auf Null reduzierten Bewegung wird auf vom Subschritt 103c auf den Subschritt 103d des Auswerte-schritts 103 verzweigt und ein halbdynamisches Wiegen durchgeführt.
Nach der Erfassung der Wiegemesswerte M1 bis M14 oder Mi mit i > 14, deren Anzahl durch den Parameter P3 vorgegeben wird, wird ein Bezugspunkt B2 erreicht und der Entscheidungsparameter E im Schritt 104 als Differenzwert zwischen dem sortierten größten und kleinsten Wert gebildet. Anschließend wird ein Bezugspunkt B3 erreicht und der Mikroprozessor startet nun die Abfrage nach mindestens einer Überlast im Schritt 105. Der Messwert M7 liegt beispielsweise der Größe nach in der Mitte zwischen dem größten und kleinsten Wert und wird mit dem höchsten Überlastgrenzwert G3 verglichen. Zusätzlich wird der Runden-zähler nach Z > 4 auf Überschreitung (Time out) abgefragt. Ist ein Kriterium erfüllt, d.h. Überlast oder Z > 4 wird der Punkt B8 erreicht. Ein gegebenenfalls vorliegender Überlastfehler oder Time out wird (im Schritt 111) weiter ausgewertet und die Waage gestoppt. Liegt keine Überlast oder Timeout vor, dann wird in einem weiterem Abfrageschritt 106 festgestellt, ob der Wert gültig oder ungültig ist. Dazu wird ein Unterpro-gramm aufgerufen, das in der vorgenannten nicht vorveröffentlichten deutschen Patentanmeldung P 198 60 294.4 näher erläutert wird.
Der Differenzwert E aus dem ersten M1 und vierzehnten sortierten Mess-wert M14 soll innerhalb des Gewichtsbereichs eines der Abschaltkriterien A1, A2 oder A3 liegen. Er liegt beispielsweise innerhalb eines vom zweiten Abschaltkriteriums A2 definierten Bereiches und ergibt somit gültige Messwerte. Das Abschaltkriterium A1 gilt für leichte Poststücke, das Abschaltkriterium A2 gilt für mittelschwere Poststücke und das Abschaltkriterium A3 gilt für schwere Poststücke. Wenn die Überprüfung der Überschreitung der Grenzwerte und Abschaltkriterien die Gültigkeit des mittig liegenden Messwertes M7 ergeben hat, ist keines der Abschaltkriterien erfüllt (Bezugspunkt B4). Da keines der Abschaltkriterien erfüllt ist kann nun zur Bestimmung des Wiegewertes auf den Schritt 107 verzweigt werden, in welchen ein Unterprogramm aufgerufen und abge-arbeitet wird (Bezugspunkt B5). Bei erfolgreicher Gewichtsbestimmung im Schritt 107 erfolgt in einem Subschritt 116 der Briefauswurf und die Übergabe des Wiegeergebnisses an die Frankiermaschine. Außerdem wird der Motor 49 oder das Getriebe 44 auf die Bewegungsrichtung vorwärts (stromabwärts) eingestellt. Das Unterprogramm ist ebenfalls der vorgenannten nicht vorveröffentlichten deutschen Patentanmeldung DE 198 60 294.4 zu entnehmen. Wenn die Waage (beispielsweise manuell) nicht gestoppt wird, was im Schritt 112 abgefragt wird, dann wird vom Schritt 112 auf den Schritt 100 zurückverzweigt. Bei einem festgestellten Stopp-Befehl wird das Ende des Betreibens der Waage erreicht (Schritt 113).
Anderenfalls, bei ungültigen Messwerten, d.h. wenn die Überprüfung der Überschreitung der Abschaltkriterien im Schritt 106 ergeben hat, dass wenigstens ein Abschaltkriterium erfüllt ist, wobei ggf. zusätzlich ein Grenzwert überschritten sein kann, dann wird der Bezugspunkt B7 erreicht und auf den Schritt 109 verzweigt, wo die Motorsteuerung 20, 26, 44, 49 umgeschaltet wird, hier um den Rücktransport des Poststückes in eine Wiegeposition zu veranlassen und um später dann ein Nachwiegen beim Vorwärtsfahren durchzuführen. Vom Mikroprozessor wird ein Sollwert n2, für eine Drehzahlsteuerung beim Rücktransport mit einer zweiten Geschwindigkeit V2 vor dem Umschalten in den zweiten Betriebsmodus ausgewählt und eingegeben (Bezugspunkt B7). Die aktuelle Drehzahl n wird vom Encoder 50 festgestellt und zur Drehzahlregelung im Schritt 109 verwendet. Vom Schritt 109 wird dann über die Schritte 108 und 110 auf den Bezugspunkt B1 zum Sortierschritt 102 zurückverzweigt und dann über die Abfrageschritte 103a, 103c, 103e zum Schritt 109 zum Umschalten der Brieftransportrichtung für den Nachwiegemodus verzweigt. Damit ein ausreichender Messweg beim Nachwiegen zur Verfügung steht, wird zuvor ein durch die Subschritte 103a und 103c ermitteltes Rückwärtsfahren durchgeführt. Es gibt eine Warteschleife, d.h. es wird nun solange auf den Subschritt 103e des Auswerteschritts 103 verzweigt, wie die Briefhinterkante am Einlauf 31 der Waage mittels Sensor S1 und Mikroprozessor im Subschritt 103e noch nicht detektiert wurde. Erreicht die Briefhinterkante den Einlauf 31 der Waage, dann wird auf einen Schritt 109 verzweigt, um die Bewegungs-richtung wieder auf "vorwärts" umzukehren.

Die (nicht dargestellte) Drehzahlregelung ist im eigentlichen Messintervall auch für den Nachwiegemodus wieder abgeschaltet. Der Zählwert des Rundenzählers wurde im Schritt 110 inkrementiert Z = Z + 1 und steht nun auf Z = 2. Die Messauswertung beginnt wieder mit der Verzweigung zum Bezugspunkt B1. Dabei wird ein durch den Subschritte 103a ermitteltes Vorwärtsfahren durchgeführt.
Der Mikroprozessor steuert nun den Motor 49 mit den gleichen Parametern (n1) an, wie beim ersten Durchlauf. Der jetzt auf Z = 2 gesetzte Rundenzähler ist im Schritt 108 abfragbar bevor der Schritt 110 zum Inkrementieren des Rundenzähler Z = Z + 1 = 3 und danach der Bezugspunkt B1 erreicht wird. In der zweiten Runde wird nun das dynamische Wiegen während des stromabwärts erfolgenden Brief-transports wiederholt. Folglich werden die Schritte 102, 103 und 104 durchlaufen. Wenn die Briefvorderkante am Auslauf im Subschritt 103b noch nicht detektiert wurde, dann wird auf den Bezugspunkt B1 am Eingang des Sortierschrittes 102 zurückverzweigt. Anderenfalls ist der Bezugspunkt B2 erreicht, wenn mittels des Sensors S2 durch den Mikroprozessor erkannt wird, dass die Briefvorderkante den Auslauf 32 der Waage erreicht bzw. bedeckt.
Die von der Wiegezelle 7 gelieferten Messwerte Mx werden im Schritt 102 sortiert und gespeichert. Das Messintervall wird rückwirkend bestimmt für x-Messwerte, welche ab Erreichen des Auslaufes 32 noch gespeichert sind. Der Bezugspunkt B3 wird nach Ausführung des Schrittes 104 zur Differenzbildung im Nachwiegemodus erreicht. Nach Durchlaufen der Abfrageschritte 105 und 106 wird der Bezugspunkt B4 erreicht, wenn keine Überschreitung des Überlastwertes oder des Rundenkriteriums (Time out) oder der Abschaltkriterien festgestellt wird. Anderenfalls, wenn eine Überschreitung der Abschaltkriterien festgestellt wird, ist der Bezugspunkt B7 erreicht. Die Motorsteuerung schaltet im Schritt 109 auf die Bewegungsrichtung rückwärts (stromaufwärts) um. Der Brief wird nur ein kurzes Wegstück rückwärts transportiert, weil im Schritt 108 die Überschreitung des Kriteriums Z > 2 erkannt wird und auf einen Schritt 115 Motor Stopp verzweigt wird. Jedoch auch beim Anhaltevorgang, wird der Brief noch etwas zurückbewegt, so dass er vollständig auf der Wiege-schale 5 liegend zu Ruhe kommt. Bei einer auf Null reduzierten Bewegung wird ein halbdynamisches Wiegen durchgeführt. Zunächst wird aber im Schritt 110 der Rundenzähler auf den Wert Z = Z + 1 = 4 inkrementiert und danach der Bezugspunkt B1 erreicht. Nach der Inkrementierung im Schritt 110 werden die Schritte 102, 103a, 103c und 103d durchlaufen und eine Differenzbildung im Schritt 104 vorgenommen, wenn alle Messwerte M1 bis Mi mit i > 14 gespeichert sind, deren Anzahl durch den Parameter P3 vorgegeben wird. Besonders große und schwere Poststücke haben lange Einschwingzeiten. Im dritten Betriebsmodus ist die Anzahl an Messwerten M1 bis Mx bei der statischen Nachmessung somit größer als vierzehn.
Eine Umschaltung auf die Bewegungsrichtung vorwärts (stromabwärts), die ggf. im Schritt 109 vorgenommen wird bleibt wirkungslos, da im Folgeschritt 108 mittels des Mikroprozessors festgestellt wird, dass die Rundenzahl Z > 2 des Rundenzählers überschritten ist und es wird im Schritt 115 der Motor abgeschaltet, im Schritt 110 inkrementiert auf den Wert Z = 4 und später im schritt 105 überprüft, ob die Zeitbedingung erfüllt ist (Time out). Die Messung endet nach Stop 112 mit einem plausiblen oder bei Stop 116 mit einen nicht plausiblen Ergebnis.

Die Figur 5 zeigt den Teilablaufplan Überlast und Abschaltkriterium. In den Abfrageschritten 105-1, 105-2, 105-3 wird der siebente Messwert mit je einem Grenzwert G3, G1 und G2 verglichen. Auf diese Weise kann die Gewichtsklasse bestimmt werden, welcher die Messwerte zuordenbar sind. Ist der siebente Messwert M7 größer als der dritte Grenzwert G3, dann wird eine Überlast festgestellt und es wird der Bezugspunkt B8 erreicht. Anderenfalls ist M7 < G3 und nun wird geprüft, ob der siebente Messwert größer als der erste Grenzwert G1 ist. Ist dies der Fall, d.h. G1 < M7 < G3 liegt vor, dann wird geprüft, ob der siebente Messwert größer als der zweite Grenzwert G2 ist. Ist dies der Fall, d.h. G1 < G2 < M7 < G3 liegt vor, dann wird auf den Abfrageschritt 106-3 verzweigt. Gemäß Abfrageschritt 106-3 darf E nicht größer als das dritte Abfragekriterium A3 sein, wenn die erfassten Messwerte gültig sein sollen. Anderenfalls wird vom Abfrageschritt 105-2 bzw. 105-3 auf den Abfrageschritt 106-1 bzw. 106-2 verzweigt. In den Abfrageschritten 106-1, 106-2, 106-3 wird die Differenz E mit einem Wert A1, A2 und A3 als Abschaltkriterium verglichen. Wenn die Differenz E größer als das Abschaltkriterium A1, A2 oder A3 ist, dann sind die Messwerte ungültig (Bezugspunkt B7). Die Messwerte sind gültig (Bezugspunkt B4), wenn die Differenz E innerhalb des Abschaltkriteriums A1, A2 oder A3 liegt. Die Begriffe "Grenzwerte" und "Abschaltkriterien" werden genauer in der vorgenannten nicht vorveröffentlichten deutschen Patentanmeldung P 198 60 294.4 erläutert. Bei einer Überschreitung der Differenz E größer als das Abschaltkriterium A1 ist auch das Abschaltkriterium erfüllt, um einen Sollwert n1 für die Drehzahlregelung des Gleichstrommotors 49 vorzugeben. Er wird mit Gleichstromimpulsen gespeist, wodurch sich aufgrund des Verhältnisses der Impulslänge zur Impulspause eine bestimmte Drehzahl ergibt und sich das Transportband eine bestimmte Geschwindigkeit einstellt, welch auch nach dem Abschalten der Regelung noch eine Zeitdauer beibehalten wird. Es wird vorausgesetzt, dass sich im ersten Betriebsmodus die Mess-anordnung mit der Wiegezelle sich bereits auf das Gewicht eingeschwun-gen hatte. Allerdings führten Störimpulse, verursacht zum Beispiel durch ein Auftreffen der Briefvorderkante auf den Wiegeteller 6 am Einlauf der Waage, zur Überschreitung des Abschaltkriteriums A1. Mit den letzten Messwerten war der eingeschwungene Zustand erreicht. Es genügen für die Messung dann wenige Messwerte M1 bis Mx, mit welchen die Auswertung im eingeschwungenen Zustand wiederholt wird. Damit kann der Brief A stromaufwärts mit einer zweiten Geschwindigkeit transportiert werden, welche größer als die erste Geschwindigkeit ist.
Wenn das Abschaltkriterium A2 erfüllt ist, wird vorausgesetzt, dass sich im ersten Betriebsmodus die Messanordnung mit der Wiegezelle sich noch nicht ganz auf das Gewicht eingeschwungen hatte. Da die wesentliche sich auf den Differenzwert E auswirkende Schwingungsamplitude immer am Anfang der Wiegeschwingung liegt, genügt es, wenn die Messung mit der gleichen Anzahl an Messwerten M1 bis M14 noch einmal durchgeführt wird und die Auswertung wiederholt wird. Wird das Abschaltkriterium A2 erfüllt, dann wird also ein Sollwert n2 für die Drehzahlregelung des Gleichstrommotors 49 vorgegeben. Die zweite Geschwindigkeit kann gleich der ersten sein.
Besonders große und schwere Briefe haben lange Einschwingzeiten.
Wenn sich im ersten Betriebsmodus die Messanordnung mit der Wiegezelle nur wenig auf das Gewicht einschwingen konnte, wird das Brief A stromaufwärts mit einer zweiten Geschwindigkeit transportiert, welche kleiner als die erste Geschwindigkeit ist. Wird also im Ergebnis der ersten Messung das Abschaltkriterium A3 erfüllt, dann wird ein Sollwert n3 für die Drehzahlregelung des Gleichstrommotors 49 vorgegeben, was die Meßzeit vergrößert. Die Anzahl an Messwerten M1 bis Mx bei der Nachmessung ist somit größer als vierzehn.

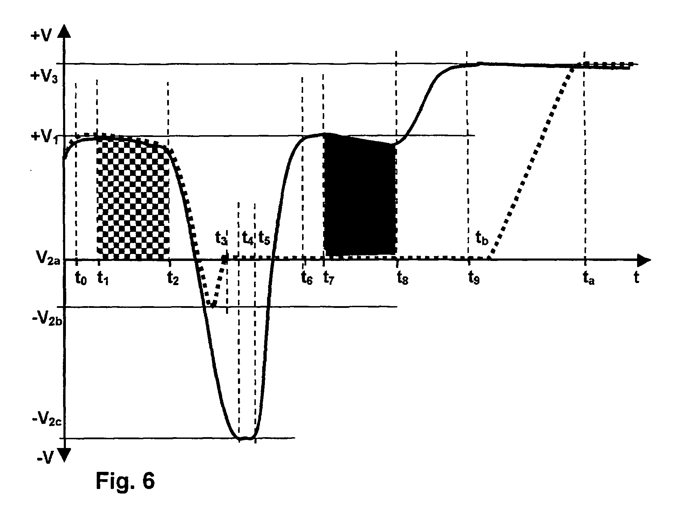

Die Figur 6 zeigt ein Geschwindigkeit/Zeit-Diagramm für die Steuerung der dynamischen Waage für den Fall, dass nach dem Wiegen ein Nachwiegen stromabwärts erforderlich wird. Die Waage befindet sich im ersten Betriebsmodus, wenn zum Zeitpunkt t₀ ein Poststück mit einer (positiven) Transportgeschwindigkeit V₁ zugeführt wird. Die Messung (Schachbrettmuster) beginnt mit dem Zeitpunkt t₁ und endet zum Zeitpunkt t₂. Zum Zeitpunkt t₁ sind Eingangsstöße auf den Wiegeteller 6 bei Briefzuführung in der Regel bereits abgebaut. Ein Nachwiegen wird erforderlich, wenn die Eingangsstöße auf den Wiegeteller 6 bei Briefzuführung noch nicht oder nicht weit genug abgebaut sind. Bei der Auswertung der Messwerte wird ein solches Erfordernis erkannt. Gerade massereiche Briefe schießen am Briefauslauf 32 wenigstens teilweise über das Hinterende der Waage hinaus. Die Transportgeschwindigkeit V₁ wird deshalb auf die Geschwindigkeit V₂ₐ = 0 reduziert und dann wird der Brief stromaufwärts zurücktransportiert (negative Geschwindigkeit) und zwar mindestens solange, bis der Sensor S₂ detektiert, dass die Briefvorderkante den Briefauslauf 32 wieder verlässt. Die Transportgeschwindigkeit wird dann wieder auf die Geschwindigkeit V₂ₐ = 0 reduziert. Die - in der Figur 3 gezeigte - punktierte Linie zeigt ein statisches Nachwiegen beginnend ab dem Zeitpunkt t₃ und endend zum Zeitpunkt t₇. Der stromabwärts angeordneten Frankiermaschine kann der Brief erst zum Zeitpunkt tₐ übergeben werden. Ein statisches Nachwiegen im zweiten Betriebsmodus ist auch der nicht vorveröffentlichten deutschen Patentanmeldung DE 198 60 294.4 dem Titel: Verfahren und Anordnung zum Bestimmen eines Gewichtes mit einer dynamischen Waage, zu entnehmen und soll hier nicht weiter ausgeführt werden.
Erfindungsgemäß kann ein erneutes dynamisches Nachwiegen in einem zweiten Betriebsmodus erfolgen, wenn der Brief A stromaufwärts mit einer zweiten (negativen) Geschwindigkeit zum Einlaufbereich zurücktransportiert wurde und der Brief eine vorbestimmte Position eingenommen hat, von der sich eine ausreichende Wegstrecke stromabwärts in Richtung der nächsten Verarbeitungseinrichtung erstreckt, um zuverlässig im dynamischen Betrieb des Waage-Fördersystems ein Gewichtsbestimmung des Briefes A zu wiederholen. Der Sensor S1 gibt nach Erkennen der Briefposition, anhand der Briefkante des Briefes A, ein entsprechendes Signal an die Steuerung 20 aus welches bewirkt, dass der Motor mit umgekehrter Drehrichtung angetrieben wird und die Transporteinrichtung den Brief A erneut stromabwärts zum Nachwiegen mit einer weiteren, einer dritten (positiven) Geschwindigkeit nochmals über die Waage transportiert. Die dritte Geschwindigkeit ist in der Figur 3 derart dargestellt, dass diese gleich der ersten Geschwindigkeit ist. Eine andere Ausführung sieht vor,
dass die Steuerung 20 abhängig davon inwieweit im ersten Betriebsmodus die Messanordnung mit der Wiegezelle bereits auf das Gewicht des Poststückes eingeschwungen ist, die Nachmessung mit höherer Geschwindigkeit durchführt.

Die Waage ist aus den Hauptkomponenten Transporteinrichtung 4, Wiegeteller 6, Wiegezelle 7 sowie elektronische Steuereinheit 20 die eine Auswerteeinheit umfasst, zusammengesetzt. Auf dem Wiegeteller 6 verläuft der Transportweg, der durch einen Briefeinlauf und Briefauslauf 32 begrenzt wird, bei denen ein Brief A durch Sensoren S1 und S2 detektiert wird. Der Brief A darf bei der Messung nicht teilweise am Briefeinlauf oder Briefauslauf 32, d.h. ausserhalb des Wiegetellers 6 aufliegen. Es ist vorgesehen, dass der Mikroprozessor 21 programmiert ist, um Sensorsignale S1, S2 und Encodersignale zu empfangen und auszuwerten. Daraus können indirekt die Abmasse eines Briefes oder ein Briefstau ermittelt werden. Bei einem gleichem Gewicht muß ein großformatiger Brief ggf. bei einer kleineren Transportgeschwindigkeit gewogen werden, als ein kleinformatiges, für welches ein größerer wirksamer Transportweg zur Verfügung steht. Deshalb ist vorgesehen, dass der Mikroprozessor 21 zur Bestimmung des für eine Gewichtsmessung wirksamen Transportweges programmiert ist. In Abhängigkeit von dem für eine Gewichtsmessung wirksamen Transportweg wird die Geschwindigkeit V₂' variiert. Dabei gilt V₂ₐ < V₂' < V_{2c}. Bei Variierung einer Geschwindigkeit V₂' kann der Mikroprozessor auf einen zugehörigen weiteren Parametersatz für die Meßwertauswertung zuzugreifen. Anstelle des Mikroprozessors können auch Mikrocontroller oder anwenderspezifische Schaltkreise (ASIC's) zur Steuerung der Waage eingesetzt werden.
Über die Schnittstelle 25 werden Daten von einer Frankiermaschine (nicht dargestellt) zur dynamischen Waage und umgekehrt der in der Waage ermittelte gültige Gewichtswert zur Frankiermaschine übertragen. Wird zum Beispiel zur Abstimmung der Steuerung der dynamischen Waage das Userinterface der Frankiermaschine mitbenutzt, dann kann ein eigenes Userinterface für die Waage entfallen. Das Einstellen ausgewählter Versandparameter für eine Portoberechnung in der Frankiermaschine und/oder von Betriebsparametern für die Waage über ein Eingabemittel der Frankiermaschine erfolgt entsprechend den jeweiligen Anforderungen an die Bearbeitung eines Mischpoststapels.

Die Taktrate für das eine Frankiermaschine durchlaufende Postgut (in Stück je Stunde) ist bei der Frankiermaschine am größten. Die maximale Briefguttransportgeschwindigkeit V₃ der Waage wird automatisch auf die der Frankiermaschine abgestimmt. Für das im zweiten Betriebsmodus durchgeführte Nachwiegen wird in Abhängigkeit vom Ergebnis der im ersten Betriebsmodus beim erstmaligen Wiegen durchgeführten Mess-werteauswertung eine vorbestimmte Briefguttransportgeschwindigkeit vor-eingestellt und ein zugehöriger Parametersatz für die Auswertung bereit-gestellt, was eine effektive Mischpostverarbeitung ermöglicht.

Die Kommunikation zwischen einer automatischen Zuführung, dynami-scher Waage und der Frankiermaschine kann beispielsweise in ähnlicher Art und Weise ablaufen, wie dies bereits in der deutschen Anmeldung DE 197 11 997 A1 unter dem Titel: Anordnung zur Kommunikation zwischen einer Basisstation und weiteren Stationen einer Postbearbei-tungsmaschine und zu deren Notabschaltung, beschrieben wurde.

## Patentansprüche

1. Verfahren zur Steuerung einer dynamischen Waage (10), mit einer steuerbaren Transporteinrichtung (4) zum Transport von Wiegegut A zu einer Verarbeitungsstation, mit einer Wiegezelle (7) zum Messen des Gewichts während des Transportes und einer Messanordnung (4, 6, 7, 20) zur Auswertung der Messwerte zwecks Steuerung der Waage (10),
**dadurch gekennzeichnet, dass** in Abhängigkeit vom Ergebnis der Gewichtsbestimmung der Betriebsmodus für die Transporteinrichtung (4) gewechselt und dabei das Wiegegut erneut während des Transportes, insbesondere beim Zurücktransport poststromaufwärts, dynamisch gewogen wird.

2. Verfahren, nach Anspruch 1, **dadurch gekennzeichnet, dass** nach dem Wechsel in den anderen Betriebsmodus das Wiegegut A stromaufwärts in Richtung einer vorgeschalteten Verarbeitungsstation zurücktransportiert und dabei gewogen wird, dann das Wiegegut A in einer vorbestimmten Position auf der Transporteinrichtung angehalten wird, der Betriebsmodus für die Transporteinrichtung (4) erneut gewechselt wird, das Wiegegut A stromabwärts zur nachgeschalteten Verarbeitungsstation transportiert und in Abhängigkeit vom Ergebnis der Gewichtsbestimmung der Nachwiegung erneut gewogen wird.

3. Verfahren, nach Anspruch 1,**dadurch gekennzeichnet, dass** nach dem Wechsel in den anderen Betriebsmodus das Wiegegut A stromaufwärts in Richtung zur vorgeschalteten Verarbeitungsstation zurücktransportiert wird, das Wiegegut in einer vorbestimmten Position auf der Transporteinrichtung (4) angehalten wird, der Betriebsmodus für die Transporteinrichtung erneut gewechselt wird, das Wiegegut A stromabwärts zur nachgeschalteten Verarbeitungsstation transportiert und dabei gewogen wird.

4. Verfahren, nach Anspruch 1- 3, **dadurch gekennzeichnet**, das die Höhe der Transportgeschwindigkeit der Transporteinrichtung (4) mit dem Wechsel in den anderen Betriebsmodus zum Nachwiegen des Wiegegutes A abhängig davon bestimmt wird, inwieweit die Mess-anordnung (4, 6, 7, 20) bereits auf das Gewicht des Wiegegutes eingeschwungen ist.

5. Verfahren, nach Anspruch 1-4, **dadurch gekennzeichnet, dass** die Transportgeschwindigkeit im zweiten Betriebsmodus betragsmäßig verschieden oder gleich der ersten Transportgeschwindigkeit im ersten Betriebsmodus ist, jedoch kleiner als eine Transportgeschwindigkeit, mit der das Wiegegut A stromabwärts in Richtung der nachgeschalteten Verarbeitungsstation abtransportiert wird.

6. Verfahren, nach Anspruch 4, **dadurch gekennzeichnet, dass** die Überschreitung von Abschaltkriterien ausgewertet wird, um zu bestimmen, inwieweit im ersten Betriebsmodus die Messanordnung (4, 6, 7, 20) bereits auf das Gewicht eingeschwungen ist.

7. Anordnung zur Steuerung einer dynamischen Waage (10), mit einer Wiegezelle (7), mit Sensoren (S1,S2) und einer Transporteinrichtung (4) zum Transport von Wiegegut A, die mit einer Steuereinheit (20) verbunden sind, zum Messen des Gewichtes des Wiegegutes A während des Transportes und zur Auswertung der Messwerte zwecks Steuerung der dynamischen Waage (10), wobei an die Waage stromabwärts eine nachgeschaltete Verarbeitungsstation angekoppelt ist,
**dadurch gekennzeichnet, dass** die Transporteinrichtung (4) der dynamischen Waage (10) einen steuerbaren Antrieb mit einem Motor (49) und einem Getriebe (44) aufweist, wobei die Steuereinheit (20) dazu ausgestattet ist, den Betriebsmodus der Transporteinrichtung (4) in Abhängigkeit vom Ergebnis der Gewichtsbestimmung zu wechseln, wobei die Transporteinrichtung (4) zur Transportrichtungsumkehr ausgestattet ist und wobei die Steuereinheit (20) und die Transporteinrichtung (4) so zusammenwirken, dass das Wiegegut mindestens einmal beim Zurücktransport poststromaufwärts erneut dynamisch gewogen wird.

8. Anordnung nach Anspruch 7, **dadurch gekennzeichnet,**
- **dass** die Sensoren (S1) und (S2) im Transportweg angeordnet sind, für die Meldung der Wiegegutposition, wenn die Transportrichtung umgekehrt worden ist,
- **dass** die Steuereinheit (20) einen Mikroprozessor (21) aufweist, der mit einem Programmspeicher (22) und einem nichtflüchtigen Speicher (23) verbunden ist,
- das die Transporteinrichtung (4) mit dem Mikroprozessor (21) verbunden ist und derart programmiert ist, dass das Wiegegut A zur nachgeschalteten Verarbeitungsstation stromabwärts mit einer ersten Geschwindigkeit V1 transportiert wird, wobei eine Gewichtsmessung mit Auswertung auf Plausibilität erfolgt und dass bei Nichtplausibilität die Transporteinrichtung (4) die Transportrichtung umkehrt und die dynamische Waage (10) eine Nachmessung des Gewichtes des Wiegegutes A während des Transportes durchführt, wobei mit der Transporteinrichtung (4) das Wiegegut A stromaufwärts mit einer zweiten Geschwindigkeit V2 zur vorgeschalteten Verarbeitungseinrichtung transportiert wird.

9. Anordnung nach Anspruch 7 und 8, **dadurch gekennzeichnet,**
- **dass** das Wiegegut A von der Transporteinrichtung (4) zur vorgeschalteten Verarbeitungsstation mit einer Transportgeschwindigkeit V2 zurücktransportiert wird, während des Rücktransportes gewogen wird, an einer vorbestimmten Position auf der Transporteinrichtung (4) angehalten und nach Umkehr der Transportrichtung der Transporteinrichtung (4), wird das Wiegegut A stromabwärts zur nachgeschalteten Verarbeitungsstation stromabwärts mit einer dritten Geschwindigkeit V3 transportiert und eine weiter Nachmessung während des Transportes durchgeführt.

10. nordnung, nach Anspruch 7, **dadurch gekennzeichnet,**
- **dass** die Sensoren (1) und (2) im Transportweg angeordnet sind, für die Meldung der Wiegegutposition, wenn die Transporteinrichtung umgekehrt worden ist,
- **dass** die Steuereinheit (20) einen Mikroprozessor (21) aufweist, der mit einem Programmspeicher (22) und einem nichtflüchtigen Speicher (23) verbunden ist,
- **dass** die Transporteinrichtung (4) mit dem Mikroprozessor (21) verbunden ist und derart programmiert ist, dass das Wiegegut A zur nachgeschalteten Verarbeitungsstation stromabwärts mit einer ersten Geschwindigkeit V1 transportiert wird, wobei eine Gewichtsmessung mit Auswertung auf Plausibilität erfolgt und dass bei Nichtplausibilität die Transporteinrichtung (4) die Transportrichtung umkehrt, dass das Wiegegut A an einer vorbestimmten Position auf der Transporteinrichtung (4) angehalten und die Transportrichtung der Transporteinrichtung (4) erneut umgekehrt wird,
- **dass** das Wiegegut A stromabwärts zur nachgeschalteten Verarbeitungsstation stromabwärts mit einer dritten Geschwindigkeit V3 transportiert und eine weitere Nachmessung während des Transportes durchgeführt wird.

11. Anordnung, nach Anspruch 7, **dadurch gekennzeichnet, dass** die Sensoren in Vorwärts- und Rückwärtsbewegung der Transporteinrichtung (4) Meldungen zur Wiegeposition ermöglichen.

12. Anordnung, nach Anspruch 7, **dadurch gekennzeichnet, dass** die Steuereinheit (20) einen programmierbaren Mikroprozessor (21) aufweist, der die Höhe der zweiten Geschwindigkeit V2 abhängig davon bestimmt, inwieweit im ersten Betriebsmodus die Messanordnung mit der Wiegezelle bereits auf das Gewicht des Wiegegutes eingeschwungen ist.

13. Anordnung, nach Anspruch 7, **dadurch gekennzeichnet, dass** die Transporteinrichtung (4) der Waage einen umschaltbaren Motor (49) mit steuerbarer Drehzahl umfasst, wobei durch die Steuereinheit (20) entsprechende Steuerbefehle erzeugt werden, durch welche die Transportrichtung und Transportgeschwindigkeit in der Waage verändert werden kann.

14. Anordnung, nach Anspruch 13, **dadurch gekennzeichnet, dass** die Transporteinrichtung (4) der Waage einen Gleichstrommotor (49) mit steuerbarer Drehzahl umfasst, wobei durch die Steuereinheit (20) die an den Motor (49) angelegte Betriebsspannung auf eine vorbestimmte Größe eingestellt wird, so dass die Transportgeschwindigkeit in der Waage verändert werden kann.

15. Anordnung, nach Anspruch 13 - 14, **dadurch gekennzeichnet, dass** ein Treiber (26) zwischen Antrieb (49,44) und die Steuereinheit (20) geschaltet ist.

16. Anordnung, nach den Ansprüchen 7 - 15, **dadurch gekennzeichnet, dass** eine Vielzahl an Sensoren (S1, S2, ..., ...) für die Meldung der Wiegegutposition im Transportweg angeordnet und mit der Steuereinheit (20) verbunden sind und dass der Mikroprozessor (21) zur Bestimmung des für eine Gewichtsmessung wirksamen Transportweges programmiert ist.

17. Anordnung, nach den Ansprüchen 7 bis 16, **dadurch gekennzeichnet, dass** der Mikroprozessor (21) zur Variierung einer Geschwindigkeit V2' programmiert ist, in Abhängigkeit von dem für eine Gewichtsmessung wirksamen Transportweg.

18. Anordnung, nach den Ansprüchen 7 bis 16, **dadurch gekennzeichnet, dass** der Mikroprozessor (21) programmiert ist, bei Variierung einer Geschwindigkeit V2' auf einen zugehörigen Parametersatz für die Messwertauswertung zuzugreifen.

## Claims

1. A method for controlling a dynamic weighing balance (10), with a controllable transport device (4) for the transport of items to be weighed A to a processing station, with a weighing cell (7) for measuring the weight during the transport and a measuring arrangement (4, 6, 7, 20) for analysing the measured values for the purpose of controlling the balance (10),
**characterized in that**, depending on the result of the determination of the weight, the operating mode of the transport device (4) is changed and the item to be weighed is again dynamically weighed during the transport, in particular during the transport back upstream the flow of postal items.

2. A method according to Claim 1, **characterized in that**, after the change to the other operating mode, the item to be weighed A is transported back upstream in direction to a processing station located upstream and is weighed at the same time, the item to be weighed A then is stopped at a predefined position on the transport device, the operating mode of the transport device (4) is changed again, the item to be weighed A is transported downstream to the processing station located downstream and, depending on the result of determination of the weight in the subsequent weighing, is weighed again.

3. A method according to Claim 1, **characterized in that**, after change to the other operating mode, the item to be weighed A is transported back upstream in direction to a processing station located upstream, the item to be weighed A then is stopped at a predefined position on the transport device (4), the operating mode of the transport device is changed again, the item to be weighed A is transported downstream to the processing station located downstream and is weighed at the same time.

4. A method according to Claims 1-3, **characterized in that** the value of the transport speed of the transport device (4) is determined upon change to the other operating mode for subsequent weighing of the item to be weighed A depending on in how far the measuring arrangement (4, 6, 7, 20) has already settled to the weight of the item to be weighed.

5. A method according to Claims 1-4, **characterized in that** the value of the transport speed in the second operating mode is different from or equal to the first transport speed in the first operating mode, but is lower than a transport speed at which the item to be weighed A is transported away downstream in direction to a processing station located downstream.

6. A method according to Claim 4, **characterized in that** the exceeding of switch-off criteria is analyzed in order to determine in how far the measuring arrangement (4, 6, 7, 20) has already settled to the weight in the first operating mode.

7. An arrangement for controlling a dynamic weighing balance (10), with a weighing cell (7), with sensors (S1, S2) and a transport device (4) for transporting the item to be weighed A that are connected with a control unit (20) for measuring the weight of the item to be weighed A during the transport and for analyzing the measured values for controlling the dynamic weighing balance (10), a downstream processing station being coupled to the balance in downstream direction,
**characterized in that** the transport device (4) of the dynamic weighing balance (10) is equipped with a controllable drive with a motor (49) and a gear (44), the control unit (20) being designed for changing the operating mode of the transport device (4) depending on the result of the determination of the weight, wherein the transport device (4) is equipped for reversing the transport direction and wherein the control unit (20) and the transport device (4) interact in such a manner that the item to be weighed is weighed at least once again dynamically during the transport back upstream the flow of postal items.

8. An arrangement according to Claim 7, **characterized in**
- **that** the sensors (S1) and (S2) are arranged on the transport path for indicating the position of the item to be weighed when the transport direction has been reversed;
- **that** the control unit (20) includes a microprocessor (21) that is connected with a program memory (22) and a non-volatile memory (23);
- **that** the transport device (4) is connected with the microprocessor (21) and is programmed in such manner that the item to be weighed A is transported downstream to a processing station located downstream at a first speed V1 in the course of which the weight is measured with a check as to plausibility and that, in case of non-plausibility, the transport device (4) reverses the transport direction and the dynamic weighing balance (10) carries out a subsequent measuring of the weight of the item to be weighed A during the transport, the item to be weighed A being transported upstream by a transport device (4) at a second speed V2 to the processing unit located upstream.

9. An arrangement according to Claims 7 and 8, **characterized in**
- **that** the item to be weighed A is transported by the transport device (4) back to the upstream processing unit at a transport speed V2, is weighed during the transport back, is stopped at a predefined position on the transport device (4) and that, after reversal of the transport direction of transport device (4), the item to be weighed A is transported downstream to the processing station located downstream at a third speed V3 and a further subsequent measurement is carried out during the transport.

10. An arrangement according to Claim 7, **characterized in**
- **that** the sensors (1) and (2) are arranged on the transport path for indicating the position of the item to be weighed when the transport direction has been reversed;
- **that** the control unit (20) comprises a microprocessor (21) that is connected with a program memory (22) and a non-volatile memory (23);
- **that** the transport device (4) is connected with the microprocessor (21) and is programmed in such manner that the item to be weighed A is transported downstream to a processing station located downstream at a first speed V1 in the course of which the weight is measured with a check as to plausibility and that, in case of non-plausibility, the transport device (4) reverses the transport direction, that the item to be weighed A is stopped at a predefined position on the transport device (4) and the transport direction of the transport device (4) is reversed again;
- **that** the item to be weighed A is transported downstream to the processing station located downstream at a third speed V3 and a further subsequent measurement is carried out during the transport.

11. An arrangement according to Claim 7, **characterized in that** the sensors allow for messages on the weighing position in forward and backward movement of the transport device (4).

12. An arrangement according to Claim 7, **characterized in that** the control unit (20) comprises a programmable microprocessor (21) that determines the value of the second speed V2 depending on in how far the measuring arrangement with the weighing cell has already settled to the weight of the item to be weighed in the first operating mode.

13. An arrangement according to Claim 7, **characterized in that** the transport device (4) of the balance comprises a reversible motor (49) with controllable speed, wherein control unit (20) generates respective control commands by which transport direction and transport speed in the balance can be altered.

14. An arrangement according to Claim 13, **characterized in that** the transport device (4) of the balance comprises a DC motor (49) with controllable speed, wherein the control unit (20) sets the operating voltage applied to the motor (49) to a predefined value so that the transport speed in the balance can be altered.

15. An arrangement according to Claims 13 - 14, **characterized** i n that a driver (26) is connected between the drive (49, 44) and the control unit (20).

16. An arrangement according to Claims 7 - 15, **characterized in that** a plurality of sensors (S1, S2, ..., ...) for indicating the position of the item to be weighed are arranged on the transport path and are connected with the control unit (20) and that the microprocessor (21) is programmed for determining the transport path effective for a weight measurement.

17. An arrangement according to Claims 7 - 16, **characterized in that** the microprocessor (21) is programmed for varying a speed V2' depending on the transport path effective for a weight measurement.

18. An arrangement according to Claims 7 - 16, **characterized in that** the microprocessor (21) is programmed for accessing, upon variation of a speed V2', a related set of parameters for the measuring value analysis.

## Revendications

1. Procédé destiné à la commande d'une balance dynamique (10), doté d'une installation de transport gouvernable (4) afin de transporter les plis à peser A vers une station de traitement, avec une cellule de pesée (7) pour mesurer le poids pendant le transport et une disposition de mesure (4, 6, 7, 20) destinée à analyser les valeurs mesurées en vue de la commande de la balance (10),
**caractérisé en ce que**, en fonction du résultat de la détermination du poids, le mode de service de l'installation de transport (4) change, les plis à peser étant alors soumis à un nouveau pesage dynamique pendant le transport, notamment au cours du transport inverse en amont du flux de courrier.

2. Procédé selon la revendication 1, **caractérisé en ce que**, après le passage à l'autre mode de service, les plis à peser A sont transportés en sens inverse, dans la direction d'une station de traitement placée en amont du courant de plis, et pesés durant cette opération, lesdits plis à peser A étant ensuite retenus dans une position prédéterminée sur l'installation de transport, **en ce que** le mode de service de l'installation de transport (4) change de nouveau, les plis à peser A étant alors transportés en aval du courant de plis vers la station de traitement placée en aval et repesés en fonction du résultat de la détermination du poids de la pesée ultérieure.

3. Procédé selon la revendication 1, **caractérisé en ce que**, après le passage à l'autre mode de service, les plis à peser A sont transportés en sens inverse, dans la direction de la station de traitement placée en amont, lesdits plis à peser A étant retenus dans une position prédéterminée sur l'installation de transport (4), **en ce que** le mode de service de l'installation de transport change de nouveau, les plis à peser A étant transportés en aval du courant de plis vers la station de traitement placée en aval et pesés durant cette opération.

4. Procédé selon les revendications 1 à 3, **caractérisé en ce que** la hauteur de la vitesse de transport de l'installation de transport (4) est déterminée avec le changement à l'autre mode de service pour repeser les plis à peser A en fonction de la mesure dans laquelle la disposition de mesure (4, 6, 7, 20) a déjà réagi au poids des plis à peser.

5. Procédé selon les revendications 1 à 4, **caractérisé en ce que** la vitesse de transport au deuxième mode de service présente un ordre de grandeur différent ou égale à la première vitesse de transport au premier mode de service, étant toutefois inférieure à une vitesse de transport à laquelle les plis à peser A seraient évacués en aval du courant de plis, dans la direction de la station de traitement placée en aval.

6. Procédé selon la revendication 4, **caractérisé en ce que** le dépassement des critères de mise hors circuit est analysés afin de déterminer la mesure dans laquelle, au premier mode de service, la disposition de mesure (4, 6, 7, 20) a déjà réagi au poids.

7. Disposition destinée à la commande d'une balance dynamique (10), dotée d'une cellule de pesée (7), avec des capteurs (S1, S2) et une installation de transport (4) afin de transporter les plis à peser A, qui sont reliées à une unité de commande (20), afin de mesurer le poids des plis à peser A pendant le transport, et d'analyser les valeurs mesurées en vue de la commande de la balance dynamique (10), sachant qu'une station de traitement placée en aval est accouplée en aval du courant de plis sur la balance,
**caractérisée en ce que** l'installation de transport (4) de la balance dynamique (10) présente un entraînement gouvernable avec un moteur (49) et un engrenage (44), sachant que l'unité de commande (20) est équipée afin de changer le mode de service de l'installation de transport (4) en fonction du résultat de la détermination du poids, sachant que l'installation de transport (4) est équipée pour l'inversion de la direction de transport et sachant que l'unité de commande (20) et l'installation de transport (4) agissent conjointement de manière à ce que les plis à peser soient repesés dynamiquement au moins une fois lors du transport inverse en amont du flux de courrier.

8. Disposition selon la revendication 7, **caractérisée en ce que**
- les capteurs (S1) et (S2) sont disposés dans le parcours pour le signalement de la position des plis à peser, lorsque la direction de transport a été inversée,
- l'unité de commande (20) présente un microprocesseur (21), qui est relié à une mémoire de programme (22) et à une mémoire non volatile (23),
- l'installation de transport (4) est reliée au microprocesseur (21) et programmée de sorte que les plis à peser A sont transportés à une première vitesse V1 en aval du courant de plis vers la station de traitement placée en aval, sachant qu'une mesure de poids s'effectue avec analyse de la plausibilité et qu'en cas de non-plausibilité, l'installation de transport (4) inverse la direction de transport et la balance dynamique (10) procède pendant le transport à une mesure ultérieure du poids des plis à peser A, sachant que les plis à peser A sont transportés à une deuxième vitesse V2 avec l'installation de transport (4) en amont du flux de courrier vers l'installation de traitement placée en amont.

9. Disposition selon les revendications 7 et 8, **caractérisée en ce que**
- les plis à peser A sont transportés en sens inverse à une vitesse de transport V2 de l'installation de transport (4) vers la station de traitement placée en amont, pesés pendant le transport inverse, retenus dans une position prédéterminée sur l'installation de transport (4) et après inversion de la direction de transport de l'installation de transport (4), les plis à peser A sont transportés à une troisième vitesse V3 en aval du flux de courrier vers la station de traitement placée en aval et une autre mesure ultérieure est effectuée pendant le transport.

10. Disposition selon la revendication 7, **caractérisée en ce que**
- les capteurs (1) et (2) sont disposés dans le parcours pour le signalement de la position des plis à peser, lorsque l'installation de transport a été inversée,
- l'unité de commande (20) présente un microprocesseur (21), qui est relié à une mémoire de programme (22) et à une mémoire non volatile (23),
- l'installation de transport (4) est reliée au microprocesseur (21) et programmée de sorte que les plis à peser A sont transportés à une première vitesse V1 en aval du courant de plis vers la station de traitement placée en aval, sachant qu'une mesure de poids s'effectue avec analyse de la plausibilité et qu'en cas de non-plausibilité, l'installation de transport (4) inverse la direction de transport, lesdits plis à peser A étant retenus dans une position prédéterminée sur l'installation de transport (4) et la direction de transport de l'installation de transport (4) étant inversée de nouveau.
- les plis à peser A sont transportés à une troisième vitesse V3 en aval du courant de plis vers la station de traitement placée en aval, une autre mesure ultérieure s'effectuant pendant le transport.

11. Disposition selon la revendication 7, **caractérisée en ce que** les capteurs permettent des signalements en mouvement avant ou arrière de l'installation de transport (4) vers la position de pesée.

12. Disposition selon la revendication 7, **caractérisée en ce que** l'unité de commande (20) présente un microprocesseur (21), qui détermine la hauteur de la deuxième vitesse V2 en fonction de la mesure dans laquelle la disposition de mesure a déjà réagi au poids des plis à peser avec la cellule de pesée au premier mode de service.

13. Disposition selon la revendication 7, **caractérisée en ce que** l'installation de transport (4) de la balance comprend un moteur réversible (49) à régime gouvernable, sachant que des instructions de contrôle correspondantes sont générées par l'unité de commande (20), par lesquelles il est possible de modifier la direction de transport et la vitesse de transport dans la balance.

14. Disposition selon la revendication 13, **caractérisée en ce que** l'installation de transport (4) de la balance comprend un moteur à courant continu (49) à régime gouvernable, sachant que la tension de service établie sur le moteur (49) est réglée à une grandeur prédéterminée par l'unité de commande (20), de sorte qu'il est possible de modifier la vitesse de transport dans la balance.

15. Disposition selon les revendications 13 et 14, **caractérisée en ce qu'**un circuit d'attaque (26) est branché entre l'entraînement (49, 44) et l'unité de commande (20).

16. Disposition selon les revendications 7 à 15, **caractérisée en ce qu'**une multitude de capteurs (S1, S2, ..., ...) est disposée sur le parcours pour le signalement de la position des plis à peser et reliée à l'unité de commande (20), et **en ce que** le microprocesseur (21) est programmé pour déterminer le parcours efficace pour une mesure du poids.

17. Disposition selon les revendications 7 à 16, **caractérisée en ce que** le microprocesseur (21) est programmé en vue de la variation d'une vitesse V2', en fonction du parcours efficace pour une mesure du poids.

18. Disposition selon les revendications 7 à 16, **caractérisée en ce que** le microprocesseur (21) est programmé pour accéder à une séquence de paramètres respective destinée à l'analyse des valeurs mesurées en cas de variation d'une vitesse V2'.
